# EUROPEAN PATENT APPLICATION

(11) **EP 4 608 035 A1**
(43) Date of publication of application: **27.08.2025**
(21) Application number: 25159342.2
(22) Date of filing: 21.02.2025
(51) Int. Cl.: H04W 72/0453, H04L 5/00

(54) **SUB-NETWORK FREQUENCY BANDS DETERMINATION**

(30) Priority: 22.02.2024 GB 202402504
(71) Applicant: Nokia Technologies Oy, 02610 Espoo (FI)
(72) Inventor: NIELSEN, Kim, Storvorde (DK); JALILI, Feridoon, Gistrup (DK); JACOBSEN, Thomas Haaning, Nørresundby (DK)
(74) Representative: Nokia EPO representatives

(57) **Abstract**

Embodiments of the present disclosure relate to determining sub-network frequency bands. In an aspect, a terminal device determines a first list of common frequency bands and a second list of candidate frequency bands to be used for creating a sub-network. The terminal device transmits, to a network node, first information indicating the first list of common frequency bands, the second list of candidate frequency bands, and the priorities. The terminal device determines second information for communication with the network node based on receiving, from the network node, a request for the second information on supported intra-band carrier aggregation capabilities of the terminal device. The terminal device transmits the second information to the network node. As such, a grant and/or an assignment of a sub-network can be made by a network node based on additional capability information of a terminal device and sub-network devices.

## Description

### FIELD

Various example embodiments generally relate to the field of communication, and in particular, to a terminal device, a network device, methods, apparatuses and a computer readable storage medium related to determining sub-network frequency bands.

### BACKGROUND

A communication network can be seen as a facility that enables communications between two or more communication devices, or provides communication devices access to a data network. A mobile or wireless communication network is one example of a communication network.

Such communication networks operate in according with standards such as those provided by 3GPP (Third Generation Partnership Project) or ETSI (European Telecommunications Standards Institute). Examples of standards are the so-called 5G (5th Generation) standards provided by 3GPP.

### SUMMARY

In general, example embodiments of the present disclosure provide a solution for determining sub-network frequency bands, especially relates to a 6G UE method for sub-network identification for network managed sub-networks. For example, by implementing the example embodiments of the present disclosure, a grant and/or an assignment of a sub-network can be made by a network node based on additional capability information of a terminal device and sub-network devices.

In a first aspect, there is provided a terminal device. The terminal device comprises at least one processor and at least one memory storing instructions that, when executed by the at least one processor, cause the terminal device at least to: determine a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; transmit, to the network node, first information indicating the first list of common frequency bands, the second list of candidate frequency bands, and the priorities; based on receiving, from the network node, a request for second information on supported intra-band carrier aggregation (CA) capabilities of the terminal device, determine the second information for communication with the network node; and transmit the second information to the network node.

In a second aspect, there is provided a network device. The network device comprises at least one processor and at least one memory storing instructions that, when executed by the at least one processor, cause the network device at least to: receive, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and determine target candidate frequency bands based on the first list, the second list, and the priorities.

In a third aspect, there is provided a method. The method comprises: determining, at a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; transmitting, to the network node, first information indicating the first list of common frequency bands, the second list of candidate frequency bands, and the priorities; based on receiving, from the network node, a request for second information on supported intra-band CA capabilities of the terminal device, determining the second information based on allocation of active frequency bands for communication with the network node; and transmitting the second information to the network node.

In a fourth aspect, there is provided a method. The method comprises: receiving, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and determining target candidate frequency bands based on the first list, the second list, and the priorities.

In a fifth aspect, there is provided an apparatus. The apparatus comprises: means for determining a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; means for transmitting, to the network node, first information indicating the first list of common frequency bands, the second list of candidate frequency bands, and the priorities; means for determining the second information based on allocation of active frequency bands for communication with the network node based on receiving, from the network node, a request for second information on supported intra-band CA capabilities of the terminal device; and means for transmitting the second information to the network node.

In a sixth aspect, there is provided an apparatus. The apparatus comprises: means for receiving, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and means for determining target candidate frequency bands based on the first list, the second list, and the priorities.

In a seventh aspect, there is provided a non-transitory computer readable medium comprising program instructions for causing an apparatus to perform at least the method according to the third aspect or the fourth aspect.

In an eighth aspect, there is provided a computer program comprising instructions, which, when executed by an apparatus, cause the apparatus at least to: determine a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; transmit, to the network node, first information indicating the first list of common frequency bands, the second list of candidate frequency bands, and the priorities; based on receiving, from the network node, a request for second information on supported intra-band CA capabilities of the terminal device, determine the second information for communication with the network node; and transmit the second information to the network node.

In a ninth aspect, there is provided a computer program comprising instructions, which, when executed by an apparatus, cause the apparatus at least to: receive, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and determine target candidate frequency bands based on the first list, the second list, and the priorities.

In a tenth aspect, there is provided a terminal device. The terminal device comprises first determining circuitry configured to determine a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; first transmitting circuitry configured to transmit, to the network node, first information indicating the first list of common frequency bands, the second list of candidate frequency bands, and the priorities; second determining circuitry configured to determine the second information for communication with the network node based on receiving, from the network node, a request for second information on supported intra-band CA capabilities of the terminal device; and second transmitting circuitry configured to transmit the second information to the network node.

In an eleventh aspect, there is provided a network device. The network device comprises receiving circuitry configured to receive, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and determining circuitry configured to determine target candidate frequency bands based on the first list, the second list, and the priorities.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1A illustrates example network environment in which example embodiments of the present disclosure may be implemented;
FIGS. 1B-1D illustrate example block diagrams of UE with front-end modules and antennas;
FIGS. 1E-1F illustrate example transceiver paths;
FIGS. 1G-1H illustrate example intra-band carrier aggregations;
FIG. 1I illustrates an example Wi-Fi and cellular spectrum;
FIG. 1J illustrates example sub-network use cases;
FIG. 1K illustrates an example architectural of sub-networks;
FIG. 1L illustrates an example diagram of a network and a UE with sub-network devices supporting single and dual band operation;
FIG. 1M illustrates an example diagram of transceiver path selection and assignment;
FIG. 2 illustrates an example signaling process of determining sub-network frequency bands in accordance with some example embodiments of the present disclosure;
FIG. 3 illustrates an example flowchart of a process of sub-network identification based on network management in accordance with some example embodiments of the present disclosure;
FIG. 4 illustrates an example of candidate frequency bands determination including MSD considerations in accordance with some example embodiments of the present disclosure;
FIG. 5 illustrates an example of the network dropping a Uu band for granting sub-network candidacy due to the priority in accordance with some example embodiments of the present disclosure;
FIG. 6 illustrates example bandwidth class information of frequency band configurations in accordance with some example embodiments of the present disclosure;
FIG. 7 illustrates another example signaling process of determining sub-network frequency bands in accordance with some example embodiments of the present disclosure;
FIG. 8 illustrates an example of one of many UE hardware configurations reflected on candidacy of sub-network allocation in accordance with some example embodiments of the present disclosure;
FIG. 9 illustrates an example showing options for determining sub-network candidacy with overhead hardware capability in accordance with some example embodiments of the present disclosure;
FIG. 10 illustrates an example showing options for determining sub-network candidacy considering UE self-interference in accordance with some example embodiments of the present disclosure;
FIG. 11 illustrates an example of configuration that requires sharing of channel bandwidth of a Uu interface in accordance with some example embodiments of the present disclosure;
FIG. 12 illustrates an example of a band combination of FDD and TDD frequency bands in accordance with some example embodiments of the present disclosure;
FIG. 13 illustrates an example use of Uu TDD uplink for sub-network in accordance with some example embodiments of the present disclosure;
FIG. 14 illustrates an example frequency band combination of FDD and TDD frequency bands in accordance with some example embodiments of the present disclosure;
FIG. 15 illustrates an example flowchart of a method for determining sub-network frequency bands in accordance with some example embodiments of the present disclosure;
FIG. 16 illustrates another example flowchart of a method for determining sub-network frequency bands in accordance with some example embodiments of the present disclosure;
FIG. 17 illustrates an example simplified block diagram of a device that is suitable for implementing embodiments of the present disclosure; and
FIG. 18 illustrates an example block diagram of an example computer readable medium in accordance with some embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and to help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which the present disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band Internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) communication protocols, the 6G communication protocols and/or beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial, a relay node, an integrated access and backhaul (IAB) node, and/or industrial wireless networks, and the like. In the following description, the terms "terminal device", "communication device", "terminal", "user equipment" and "UE" may be used interchangeably.

As used herein, the term "resource", "transmission resource", "resource block", "physical resource block" (PRB), "uplink (UL) resource" or "downlink (DL) resource" may refer to any resource for performing a communication, for example, a communication between a terminal device and a network device, such as a resource in time domain, a resource in frequency domain, a resource in space domain, a resource in code domain, a resource in a combination of more than one domain or any other resource enabling a communication, and the like. In the following, a resource in time domain (such as, a subframe) will be used as an example of a transmission resource for describing some example embodiments of the present disclosure. It is noted that example embodiments of the present disclosure are equally applicable to other resources in other domains.

Short range sub-network is a promising component to meet the extreme performance requirements in terms of latency, reliability and/or throughput envisioned for certain the sixth generation (6G) short-range scenarios. The short-range sub-networks are generally installed in/on/around specific entities e.g., in-vehicle, in-body, in-house, etc., to provide life-critical data service with extreme performances over the local capillary coverage.

The sub-networks have the following pivotal properties and technical features: i) support of extreme performance requirements in terms of latency, reliability and/or throughputs; (ii) low transmit power, which implies limited coverage range (e.g., in the order of few meters); (iii) star or tree topology with one sub-network access point (AP) and one or more sub-network user equipments (UEs) under AP's control; (iv) overall mobility of AP and associated sub-network devices, but limited mobility across different sub-networks; and (v) part of 6G network and must continue to work also when out of network coverage.

As discussed above, supporting the feature and creation of sub-network that is foreseen to be increasingly important for future users. Take 6G use case as an example, ever-increasing radio paths in smartphone designs allow further utilization of spectrum at the UE assisted- or beyond the control of the network. Therefore, the present solution is based on UE front-end design and configuration for one or more simultaneous active systems, in which the UE serves as both device in a network, and the AP creating a subnetwork. The present solution considers the case of how a UE (such as a smartphone) must create and serve as AP in a sub-network that negotiates with the cellular system on how to coincide with existing active radio channels sharing the resources.

Therefore, example embodiments of the present disclosure provide a solution for determining sub-network bands. For example, some embodiments of the present disclosure propose a UE front-end design and configuration for one or more simultaneous active systems, in which the UE serves as both device in a network, and AP creating a subnetwork. The implementations described herein would be applicable to any device that can support a sub-network, within an existing network. According to the example embodiments of determining sub-network bands as provided in the present disclosure, the terminal device can assist the network for creating the grant and assignment of the sub-network, and a grant and/or an assignment of a sub-network can be made by a network node based on additional capability information of a terminal device and sub-network devices.

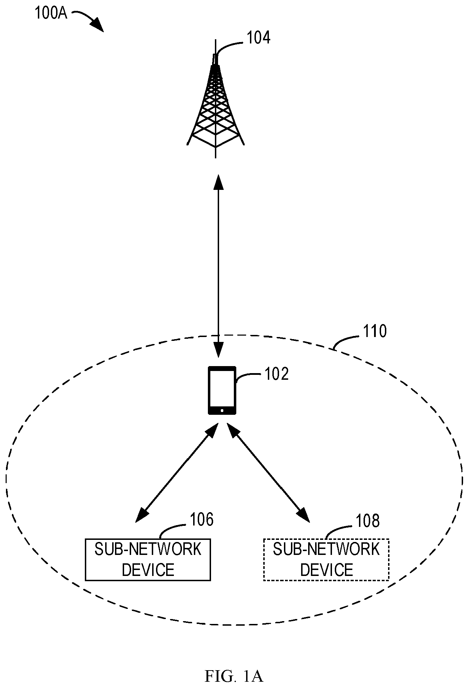

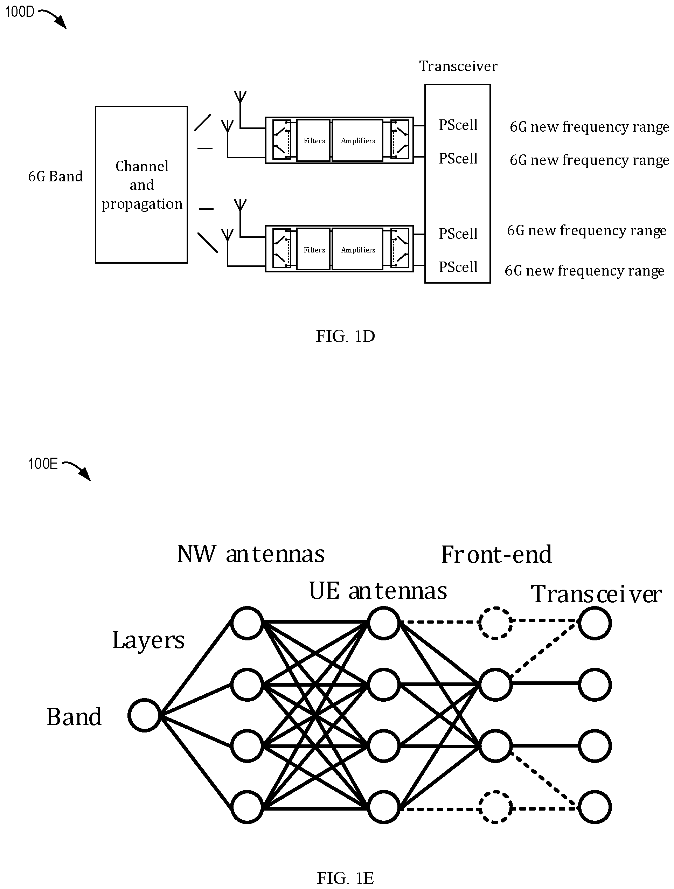

For illustrative purposes, principles and example embodiments of the present disclosure of determining sub-network bands will be described below with reference to FIG. 1A- FIG. 18. However, it is to be noted that these embodiments are given to enable the skilled in the art to understand inventive concepts of the present disclosure and implement the solution as proposed herein, and not intended to limit scope of the present application in any way.

Reference is made to FIG. 1A, which illustrates an example of a communication network 100A in which some example embodiments of the present disclosure may be implemented. As illustrated in FIG. 1A, the communication network 100A includes a terminal device (which may also be referred to as user equipment or UE) 102 and a network device (which may also be referred to as a gNB or base station) 104. Although the terminal device 102 and the network device 104 are shown in FIG. 1A, the numbers of the network devices and the terminal devices are not limited. In other words, there may be one or more network devices and one or more terminal devices in the communication network 100A.

In communication network 100A, UE 102 may be, for example, implemented as a smartphone acting as an AP. The UE 102 needs to determine the configuration of the sub-network based on information available to the UE 102. The sub-network 110 may comprise sub-network devices 106 and 108. The sub-network 110 will be created using the determined configuration for communication between the UE 102 and the sub-network devices 106 and 108. The sub-network devices 106 and 108 may vary in capabilities, supported bands and priorities of service depending on different sub-network types, such as sensors or pacemakers and so on.

It is to be understood that the number of devices and their connection relationships and types shown in FIG. 1A are for illustrative purposes without suggesting any limitation. The communication system 100A may comprise any suitable number of devices adapted for implementing embodiments of the present disclosure.

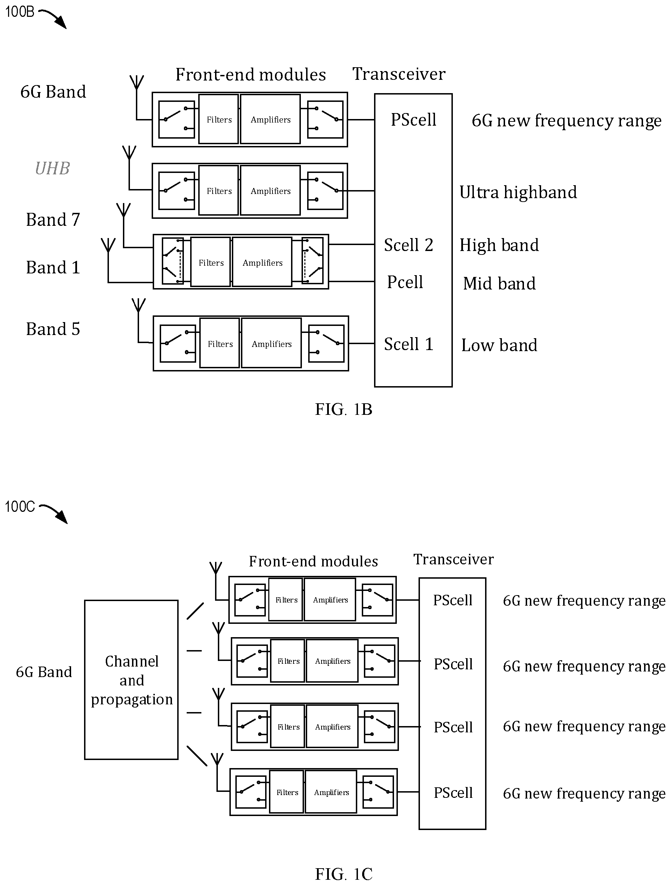

Some practices in especially UE smartphone design that scales the number of parallel radio connections for maximum bandwidth utilization will be described with reference with FIGS. 1B-1M. These will be helpful for understanding the solution of the present disclosure. Reference is made to FIGS. 1B-1D, which illustrates example block diagrams of UE with front-end modules and antennas. As shown in FIG. 1B, the UE supports both uplink and downlink. The UE may comprise front end modules that connects between the RF transceiver and the antennas. These front-end modules are designed to cover the band-groups (frequency sections). Considering the combinations of bands, FIG. 1B shows a block diagram connecting antennas to the UE transceiver.

From FIG. 1B, it is seen that each front-end module supports one or more dedicated antennas, and that the antennas map frequency sections (bands to the left) into transceiver paths that allow the transceiver connections on several frequency sections simultaneously. The case of DC_n1A-n5A-n7A_6Gnn is shown, including "spare" capacity at the ultra highband (UHB), that is not mapped inside the Transceiver box as an example for 6G analogy. Inside the transceiver there's a mapping that the network controls for assigning Primary cell (Pcell), primary secondary cell (PScell) and secondary cells (Scell), indicating these are active, whereas the UHB is inactive. A UE may comprise one or more front-end modules that allow one or more simultaneous activation of frequency separated bands of same or different band-groups. The type of carrier aggregation (CA) shown in this subsection is commonly known as interband carrier aggregation. It can be combined with intra-band CA.

Reference is made to FIGS. 1C-1D, which illustrate block diagram of UE with front-end modules and antennas for the same frequency of operation A: dedicated FE modules, and operation B: with two path FE modules. Operations A and B are both using examples of MIMO on a new 6G frequency range, but this may also be existing/currently known frequency ranges.

A UE may comprise front end modules that connect between the RF transceiver and the antennas of the same operational frequency. This multiplies the UEs capability to connect on the same time and frequency occurrences. This type of connection is called multiple input multiple output (MIMO) and it is a way to increase the data transfer capacity of the same time and frequency occurrences. The methods for transmitting and receiving in these signal-conditions is not relevant to the present disclosure, but the block-diagram that enables MIMO in a 4x4 example in FIG. 1C is established for better understanding.

Under the right channel and propagation conditions a UE with uplink- and downlink capability of 4x4 MIMO will be able to transmit or/and receive four times inside the same spectrum due to the existence of 4 un-correlated multi-paths within the channel. This is called a 4-layer MIMO connection. A UE has multiple transceiver paths of the same operational frequency to comply with MIMO connectivity and that each path requires a dedicated antenna of the same operational frequency.

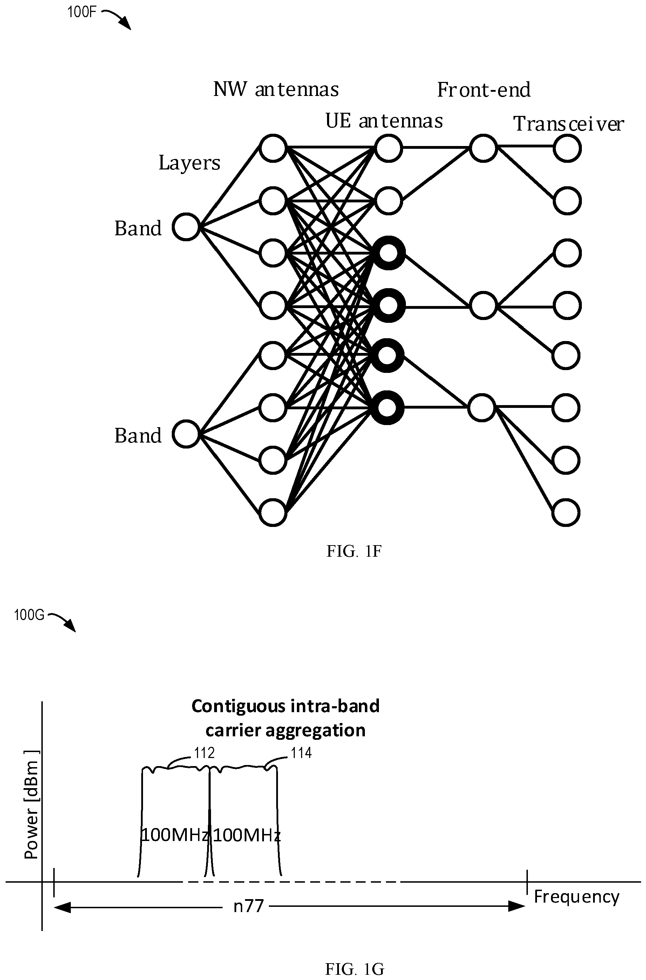

Reference is made to FIGS. 1E-1F, which illustrate example transceiver paths. FIG. 1E shows the single band transceiver paths 100E, and FIG. 1F shows two-band example with 4 shared and two dedicated antennas 100F. Combining the minimum set of CA/ dual connectivity (DC) and MIMO a presentation of the transceiver paths could be illustrated as the connections for one band and two bands t having 4 shared antennas connecting to two bands of different band-groups in FIGS. 1E-1F. Antenna sharing is achieved through dual resonance and use of diplexer/triplexer/quadruplexer to separate the signals towards the respective front-end modules shown as thick lined circles in FIG. 1F. There is a relation between the bands mapped to layers that must match the transceiver nodes.

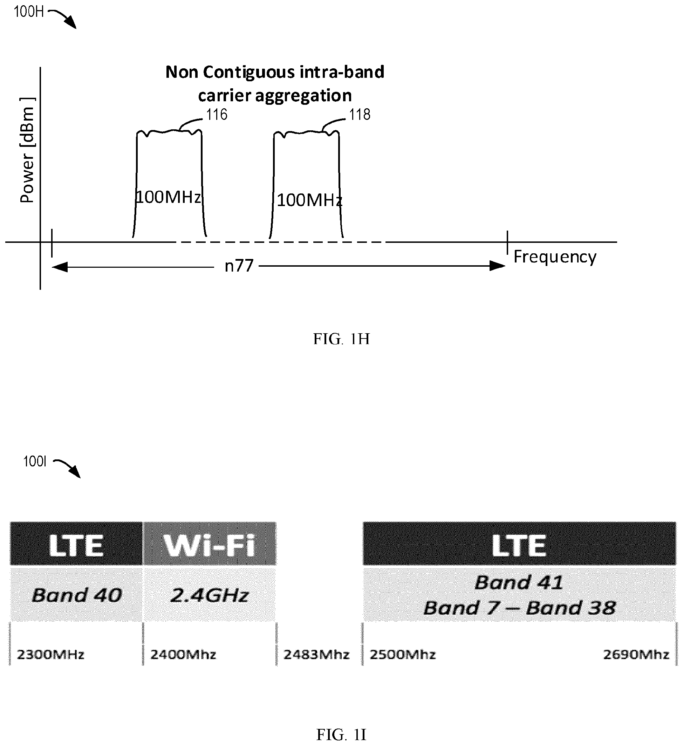

Reference is made to FIGS. 1G-1H, which illustrate example intra-band carrier aggregations. FIG. 1G shows contiguous intra-band with two 100MHz channels, and FIG. 1H shows Non-contiguous intra-band with two 100MHz channels. There is no frequency gap between channel 112 and channel 114 in FIG. 1G. There is a frequency gap between channel 116 and channel 118 in FIG. 1H.

The NodeB (NB) defines a channel bandwidth inside the cell which serves the UEs. This channel bandwidth can be from 1.4MHz in LTE to 400 MHz in frequency 2 (FR2) new radio (NR) but may be of any bandwidth serving any type of communication system. Although the NB has a defined channel bandwidth there is more to utilization of the channel bandwidth. Additionally, a NB may increase the available spectrum through intra-band carrier aggregation provided the operator owns the license to the spectrum.

Another level of complexity in allocation of spectrum/frequency resources is bandwidth parts (BWP). Inside a channel bandwidth there is another level of granularity that allows BWPs to be used as lesser clusters of resource blocks. This may be regarded as frequency division multiplexing (FDM).

Further, there is also an aspect of time division multiplexing (TDM), which in contrary to FDM above slices the operation in time division, which enables different modes of operation and services relative to a timeline. The granularity of the time division can again be different, but the system may share the same frequency of operation and divide the time to service multiple communication links within the same frequency of operation.

Based on the previous discussions with reference to FIGS. 1B-1H, it could seem that there's multiple options of connections a UE may be granted and that this simply is scaling as technology allows expansion of hardware.

Referring to FIG. 1A, as part of the UE hardware design and the requirements tied to the cellular/wireless communication system is the path loss, which determines the range and distance the radio access technology (RAT) serves. A communication system with an organic user is not to be harmed from radiation of radio waves, for which reason a finite level of energy is to be emitted at the UE. This could be called the power class. The UE has ways of dealing with the path loss. In the transmitter the UE will adjust the output power, so that it matches the requirements of signal strength at the NB. This also limits that any-and-all UEs inside a cell do not transmit with more power than the UE next to it, since the NB controls the UEs output power levels. In close distance to the NB the UE will typically transmit at lowest power level, while at cell edge it will transmit at maximum output power (according to power class).

The UE receiver is a bit different. The receiver has a dynamic range in which it can receive the downlink signal from the NB. Some receivers have gain steps to adjust the input signal-to-noise and interference level, which allows the UE to tolerate strong interference without saturating. The path loss is simply regarded as a "level-knob" determining the signal strengths in both uplink and downlink. This path loss is dependent on the antenna directivity of the UE among others, which means that a UE with more antennas will experience different path loss at each antenna. Path loss may lead to some UE antennas, not being of use to the communication link, due to excessive path loss.

Noise is also present in communication systems. When the path loss becomes large the signal power level approaches the noise level. This will reduce the signal-to-noise ratio (SNR). In advanced communication systems signal-to-noise-ratio allows different throughput conditions, typically achieved using a variety of modulation schemes. SNR results in different conditions of throughput.

Now reference is made to FIG. 1I, which illustrates an example Wi-Fi and cellular spectrum 100I. Interference will affect the performance of the communication system. Interference is here regarded as an external-generated source, that the UE has no control of. Often interference is combined with noise as signal-to-interference and noise ratio (SINR). Both noise and interference are dependent on the antenna link and direction. A UE may therefore experience differences in SINR across antennas and transceiver paths. SINR is specific to each path a signal is transmitted or received by the UE.

Besides the challenges explained above, the UE also needs to deal with yet another issue that arises inside the UE as it is engaged in more simultaneous modes of operation. UE co-existence issues arise as the UE activates more than one RAT. The most common co-existence issue arises when Wi-Fi and cellular modems simultaneous operate as shown in FIG. 1I. Some simultaneously operated RAT may cause undesired co-existence issues that can lead to performance degradations and even link loss.

Another issue the UE suffers is self-interference. This issue arises in CA/DC when the UE has more than one band active. It is a known issue in the 3rd generation partnership project (3GPP)/Cellular where the UE is allowed relaxed performance requirements as the only mitigation means. In essence the UE will only work poorly in the bands of operation that is affected by self-interference. A UE can have methods to determine that it is suffering of self-interference. A source to self-interference is always high UE output power of the band or bands of operation that presents the aggressor(s) (fundamental tone or harmonics/spectrum emission). Antennas and transceiver paths can be severely impacted in performance during simultaneous uplink activity that could render the transceiver paths useless in the downlink.

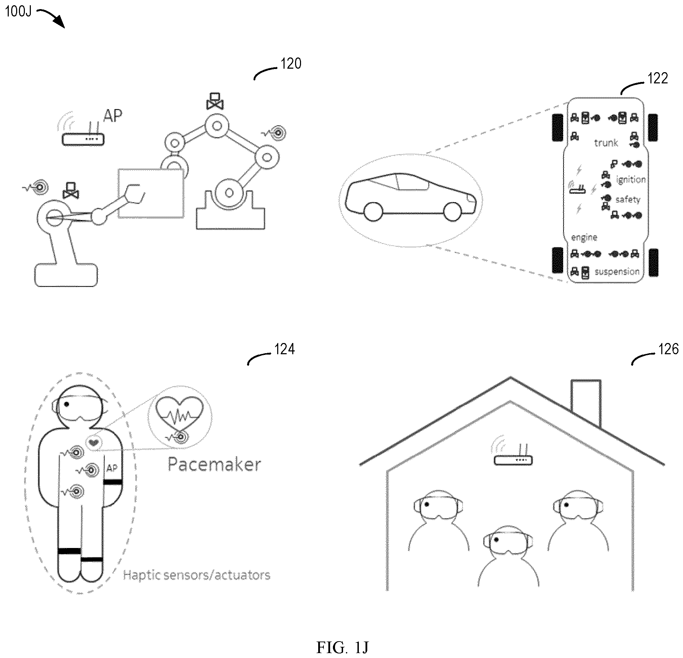

Reference is made to FIG. 1J, which illustrates example sub-network use cases 120, 122, 124 and 126. Use case 120 shows In-robot/in-production module sub-network. Use case 122 shows in-vehicle sub-network. Use case 124 shows in-body sub-network. Use case 126 shows in-house sub-network. It is to be understood that the use cases are not restricted to theses example use cases 120, 122, 124 and 126 as discussed above. The sub-network use cases are also applicable to other application areas.

The system design for sub-network shall take the above technical features into account. In particular, the use cases of in-robot/in-production module sub-networks and in-vehicle sub-networks have extreme performance requirements in both reliability (up to 6 nines or more) and latency (down to the level of 100us or even/ below), e.g., for the high demanding periodic deterministic communication services which may be the most challenging scenarios in 6G system.

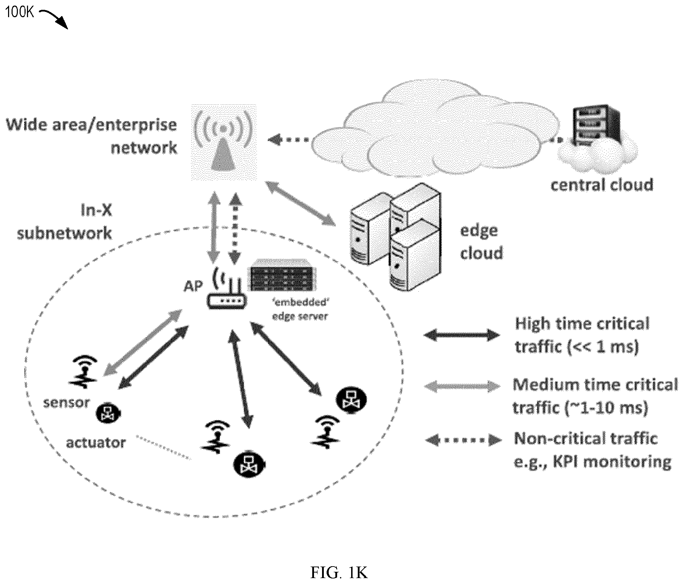

Reference is made to FIG. 1K, which illustrates an example architectural 100K of sub-networks. FIG. 1K shows the architectural aspects for sub-networks where the sub-network AP, on the one hand, serves and manages the sub-network devices in the capillary sub-network coverage, while on the other hand it is connected to the BS of the 6G WAN, which could to a certain extent control and coordinate different sub-networks. Here an In-X sub-network is used to describe a sub-network which operated within a specific entity, where X represents everything.

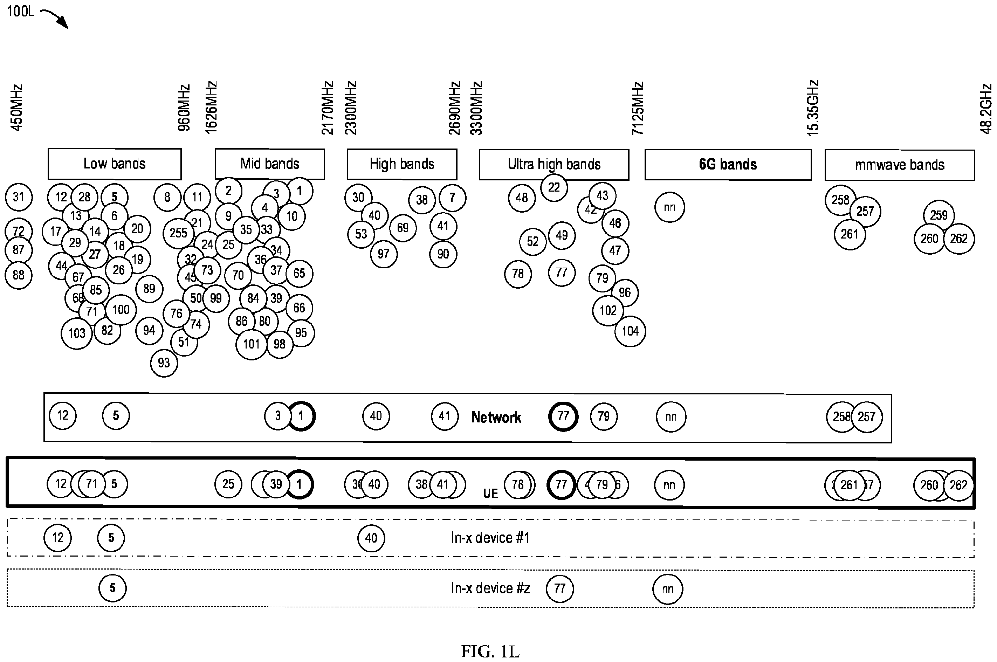

Reference is made to FIG. 1L, which illustrates an example diagram 100L of a network and a UE with sub-network devices supporting single and dual band operation. A UE may be limited in supported bands as seen from the sub-network devices # 1 and #z that indirectly lower the options for sub-networking. This could be due to single or dual band sub-network devices as shown in FIG. 1K.

There is clearly an opportunity for 6G sub-networks as it means that not all hardware is utilized at the same time by the AP, so the following observations is made to motivate smart hardware reuse for 6G sub-networks: (i) not all transceiver paths (frequencies of simultaneous operation) will be used at the 6G smartphone (AP); (ii) transceiver paths within the UE accessible to an operator is increasing with MIMO and carrier aggregation that is achieved through expansion of UE hardware capabilities; (iii) there is a correlation between the number of component carriers the UE can support and the path loss between the UE and the base station, in both downlink (due to a decreasing SINR) and particularly in uplink (where the UE can become power limited); and (iv) interference distortion problems scales non-linearly with the transmission power, this opens for opportunities for new coexistence mechanisms when considering a low power 6G sub-network device.

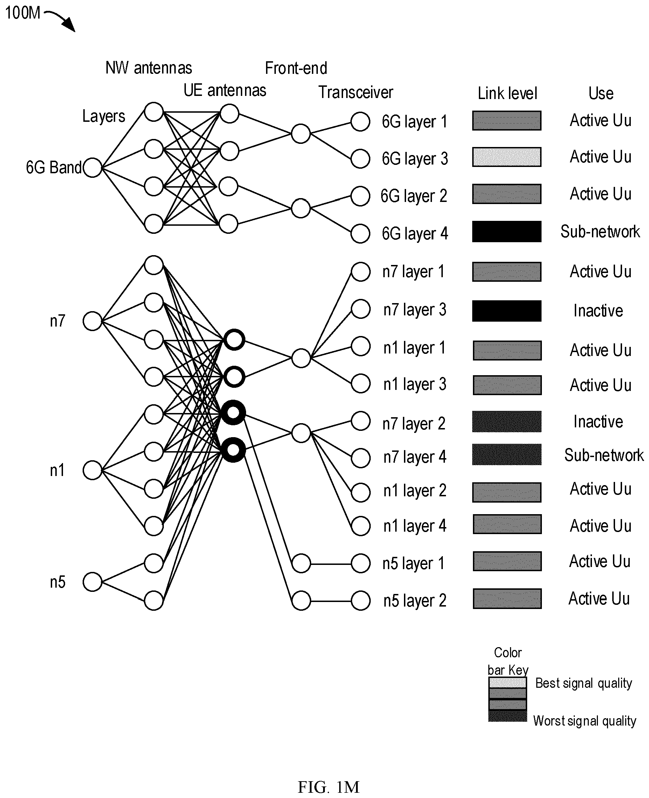

Reference is made to FIG. 1M, which illustrates an example diagram 100M of transceiver path selection and assignment. There are no known solutions that considers radio and hardware aspects inside a UE such as the smartphone to shape and define the sub-network with the UE acting as the AP. It is not a simple and trivial configuration without inputs and measures that assist a UE in becoming an AP, and making the sub-network fit into existing licensed spectrum.

Considering that a UE that is required to create and serve as AP for a set of devices the UE must identify and configure the sub-network. The network is not informed of the sub-network device capabilities (e.g., there is no sub-network device-to-network registration), so only the UE acting as AP would know the capabilities of the sub-network devices. The UE has several transceiver paths, as shown for the example case in FIG. 1M, but there is a big dilemma in how and where to configure this sub-network. It is insufficient to simply consider link level power, and a more generic method is required for the UE to act as AP.

Therefore, there is a need to consider the case that a UE (such as a smartphone) creates and serves as an AP in a sub-network that negotiates with the cellular system on how to coincide with existing active radio channels sharing the resources. Further, there is a need to consider how the UE can determine spectrum resources that match the sub-network device needs and map those onto configuration messages that the network (NW) can use for allocating available resources for the UE to serve the sub-network as a host for the sub-network devices.

Accordingly, some embodiments of the present disclosure propose a solution for selecting candidacy of the sub-network based on information only available to the UE of its hardware capabilities with references to FIG. 1B to FIG. 1M and priorities of the sub-network devices which will be described in detail later. The priorities can help with determining that if the UE has potentially a subscriber sub-network device that may be supported, or if the sub-network device is of lower priority that the network may take into consideration of where to grant the sub-network for the UE (acting as an AP). The general concept of the present disclosure will be described hereinafter.

A UE has a list of band combinations which the UE hardware and software supports. For cellular devices, this is extractable by reading the UE capability list from the UE, and for non-cellular systems, similar information is available to the cellular devices. This list of band combinations is available for the UE to determine its hardware capabilities. The UE may know its radio frequency (RF) front-end design and transceiver path routing from this list including the antenna connections.

The NW and UE may know the hardware capabilities of the sub-network devices through prior configuration. For example, a sub-network device may be associated at some point in the past, and this means that its properties are registered to the NW. This means that the network may generate a common band list between the UE (acting as an AP) and the sub-network device as well.

If the sub-network device is registering to the UE for the first time, the UE may receive a similar list from the sub-network device(s) that is to be supported by the UE. To identify the common bands, the UE may correlate and create a common band list between the UE and the sub-network devices. This common band list is a subset from a band list for both the UE and the sub-network devices.

Therefore, it is possible for the UE either to send a common band list of the UE and sub-network devices, or to transfer the sub-network device hardware capabilities to the NW, so that the NW may generate the common-bands list. Based on the common band list, the UE next may identify the supported frequency bands towards the NW, which may be through the Uu interface. Starting from here, active cells and cells to be monitored may be found. This information may be then used by the UE to find available spectrum resources that are on the common band list. The UE may distinguish the candidate bands for the sub-network between bands that it supports in addition and simultaneously to the current active cells (P-, PS- and Scells) and the candidate bands that may require further network assistance in establishing the spectrum/time resources for the UE to host the sub-network within existing active cells.

The NW may consider the information received from the UE consisting of sub-network request, sub-network device priorities, the common band list and candidate bands. The network may consider the hardware capabilities of both the UE and the sub-network devices and allows the UE to create the required sub-network. The network may consider the priorities, since this can help the NW to determine the sub-network grant and/or configuration based on subscription. Next, the NW may check for free available spectrum/channels, and if none are available, the NW may consider the candidate bands the UE exchanged to grant the sub-network where best suited. This may depend on CA throughput of individual component carriers, MIMO layers that may be freed up, spectrum sharing through BWP assignments, or through different TDM/FDM schemes as described with reference to FIG. 1B to FIG. 1M.

When one or more spectrum resources are found to satisfy the conditions of available spectrum, the UE may receive sub-network grant and configuration information from the NW. The UE may apply the re-configuration of the UE front-end configuration splitting the communication links between partially the Uu interface and partially the sub-network hosting.

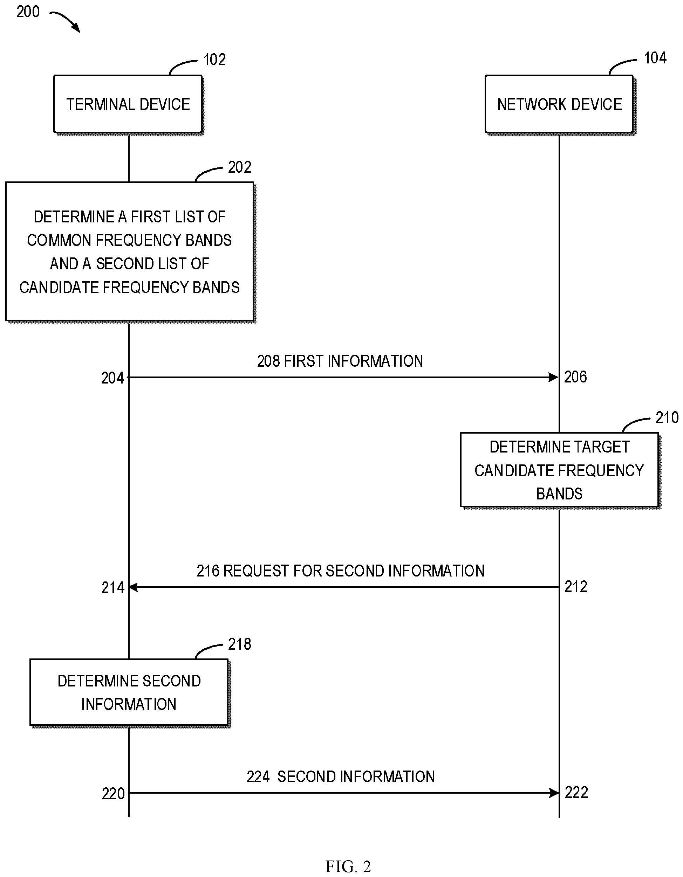

Reference is made to FIG. 2, which illustrates an example signaling process 200 of determining sub-network bands in accordance with some example embodiments of the present disclosure. FIG. 2 will be described with reference to FIG. 1A.

The terminal device 102 determines (202) a first list of common frequency bands and a second list of candidate frequency bands to be used for creating the sub-network 110. The common frequency bands may be supported by the sub-network 110 and the terminal device 102. The candidate frequency bands may be supported by the network device 104 (sometimes may also be referred to as a network node 104 hereinafter) and the terminal device 102. The common frequency bands and the candidate frequency bands may be associated with priorities.

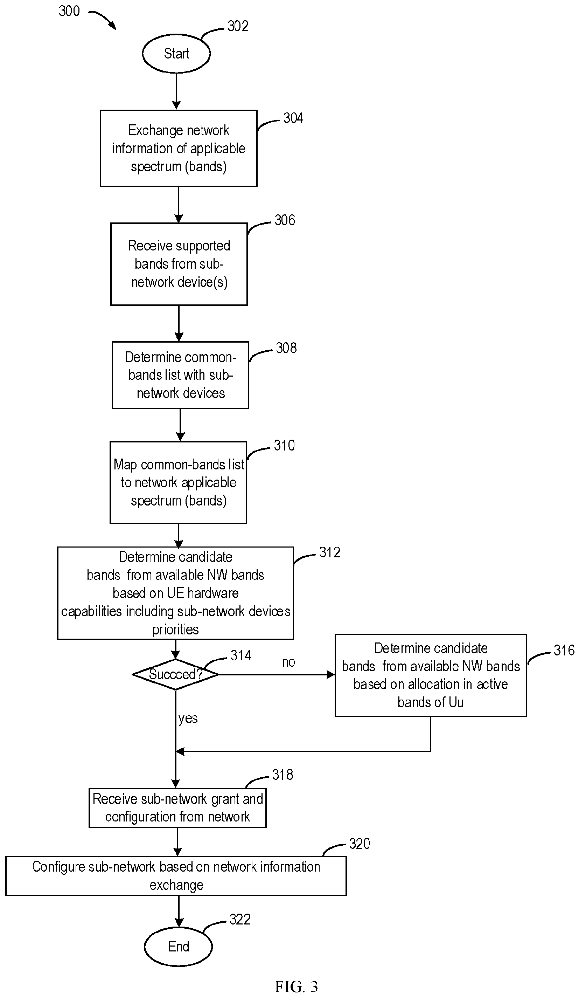

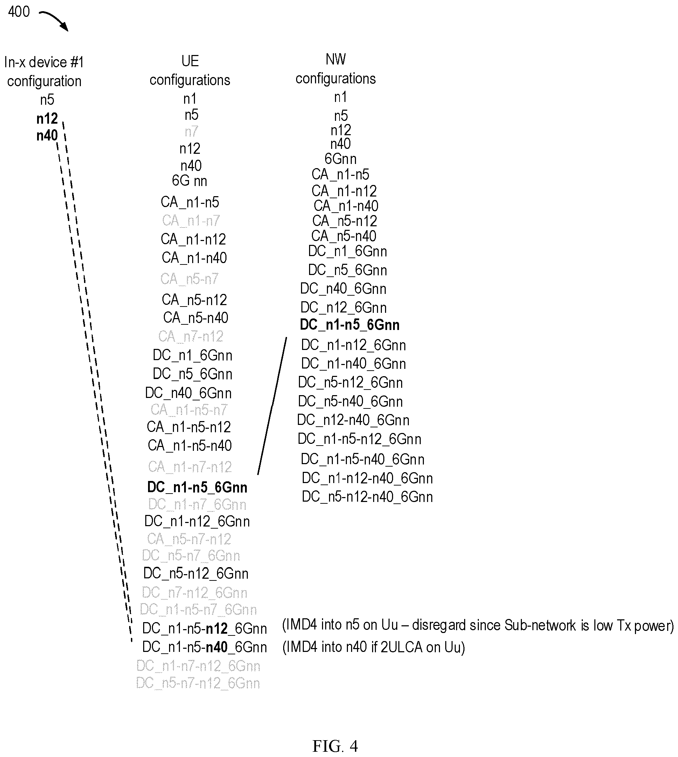

In some example embodiments, the details of the determination block 202 will be described with to FIG. 3 and FIG 4. FIG. 3 illustrates an example flowchart of a process 300 of sub-network identification based on network management in accordance with some example embodiments of the present disclosure. FIG. 4 illustrates an example 400 of candidate frequency bands determination including MSD considerations in accordance with some example embodiments of the present disclosure.

As shown in FIG. 3, at 302, the process 300 starts. At 304, the terminal device 102 may exchange network information of applicable spectrum or bands with the network device 104. At 306, the terminal device 102 may receive supported bands from subnetwork device(s) 106 and/or 108. At 308, the terminal device 102 may determine the common band list (referred to as the first list) with subnetwork device(s) 106 and/or 108. Block 308 in FIG. 3 may correspond to block 202 in FIG. 2.

At 308, The terminal device 102 may identify common bands and candidate bands (referred to as a second list). Each common band and candidate band may be associated with a priority. There may be some ways to determine the respective priority. For example, by maximum sensitivity (MSD) (with the configured Pcell or Scells) or by the number of transceiver bands. The common and candidate bands, and the respective priorities may be reported to the network device 104 along with signaling quality indication reports as well as a sub-network priority indication (if not already available at the terminal device 102).

As shown in FIG. 4, The selection happens at the terminal device 102. The terminal device 102 may compare the NW available and assigned bands (the third column) to those found in the sub-network device capabilities (the first column). For example, the carrier assignment from the NW can be found in the UE configuration list, and the UE 102 may check if there's a higher order band combination that contains any of the In-everything (X) device bands. The In-X device band may be not in the configuration of the NW, but supported by the NW. The two configurations with DC_n1_n5-n12 and DC_n1_n5-n40 may indicate that the UE 102 can support the sub-network on available licensed spectrum of the network if allowed by the NW configuration.

In some example embodiments, the UE 102 may find in a plurality of combinations of fewer frequency bands than a configured combination of frequency bands supporting the sub-network 110 (may referred to as fallback configurations hereinafter) of the added sub-network candidacy (such as the DC_n1_n5-n12 and the DC_n1_n5-n40) that when CA_n1-n5-n12 is chosen, then intermodulation products 4 (IMD4) may affect n5 receiver. In this event, the UE 102 may check if the uplink includes the sub-network band that allows it to overrule this condition. Since the UE uplink power of n12 can be limited when used in a sub-network, no self-interference may happen in this configuration.

For CA_n1-n5-n40, the UE 102 may find that n40 can be impacted by IMD4, which means that both n1 and n5 has an uplink. Since the UE 102 knows that it is limited to a total of two uplinks, one for Uu and one for the sub-network, the UE 102 may disregard the two Uu simultaneous uplink configurations causing self-interference. The UE 102 may therefore offer to the NW the options to be granted either of the two candidate bands n12 and n40 for the sub-network 110.

In summary, the procedures at the UE 102 to check the band configurations may comprise the following procedures (1) to (5). Procedure (1): the UE 102 may determine the supported bands of the sub-network device (i.e., the common-band or the first list). Procedure (2): the UE 102 may identify if the higher order configurations exist and include the common-bands. Procedure (3): for the configurations that allows combined Uu and sub-network support, the UE 102 may identify self-interference issues including those of the fallbacks configurations (e.g., lesser order combinations than the high order combinations or combinations of fewer frequency bands). Procedure (4): The UE 102 may have a list of CA and MSD relation, and use this information for sub-network band candidacy. Procedure (5): the UE 102 may place candidate bands into memory for UE-to-NW messaging of candidate bands and priority.

In some example embodiments, at Procedure (4), there is a table for UE's decision for MSD affected fallback combinations, which is shown below as Table 1.

**Table 1: UE decision for MSD affected fallback combinations**

| **MSD Type** | **Victim band is Uu** | **Victim band is sub-network** |
|---|---|---|
| UL harmonic | Disregard self-interference issue due to low sub-network uplink power. | Lower candidacy compared to alternate band combinations. Sub-network may suffer in receive quality |
| Harmonic mixing | | |
| Cross-band interference | | |
| | Higher candidacy | |
| Intermodulation (Rule out all Uu-Uu uplink combinations) | Sub-network uplink power eliminates self-interference issues. | |
| | Higher candidacy | |

Referring back to FIG. 2, after 202, the terminal device 102 transmits (204), to the network device 104, first information 208 indicating the first list of common frequency bands, the second list of candidate frequency bands, and the priorities. The network device 104 receives (206) the first information 208 from the terminal device 102. The network device 104 determines (210) target candidate frequency bands based on the first list, the second list, and the priorities.

If no resource is determined to be used for creating the sub-network 110 within the first list, the network device 104 transmits (212), to the terminal device 102, a request 216 for second information 224 on supported intra-band carrier aggregation (CA) capabilities. The intra-band CA capabilities may comprise in-band co-coexistence capabilities. The terminal device 102 receives (214) the request 216 from the network device 104.

The terminal device 102 determines (218) the second information 224 for communication with the network device 104. Then, the terminal device 102 transmits (220) the second information 224 to the network device 104. The network device 104 receives (222) the second information 224 from the terminal device 102.

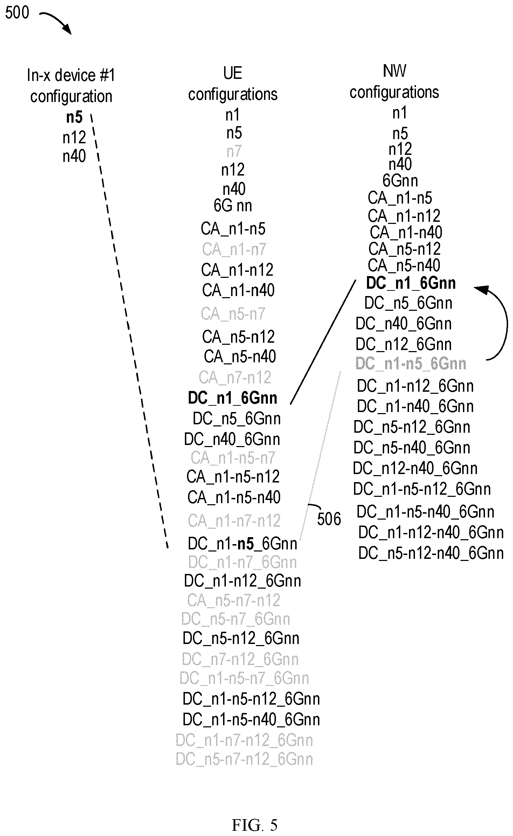

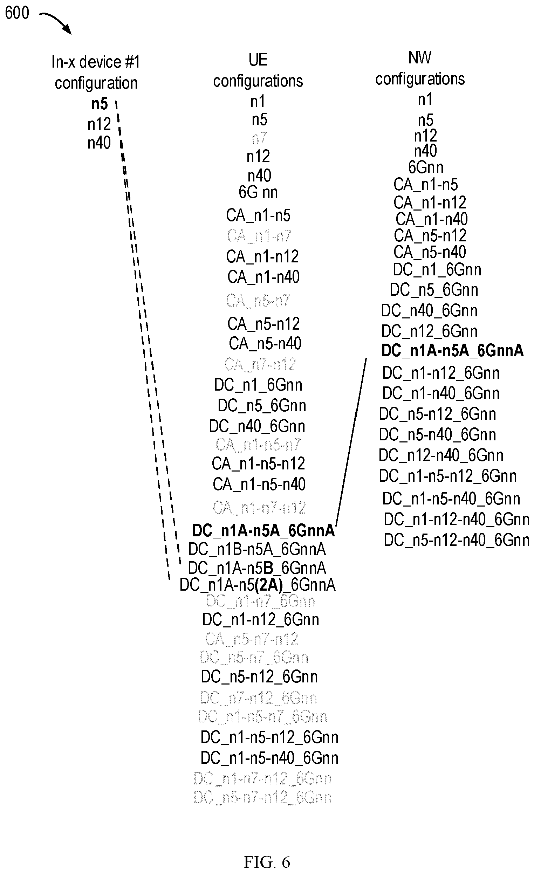

In some example embodiments, the determination blocks 210 and 218 will be described with FIG. 3 and with FIGS. 5 and 6. Now referring to FIG. 3, at 310, the terminal device 102 may map the common band list to the network applicable spectrum or bands. At 312, the terminal device 102 may determine the target candidate bands from the available NW bands (such as the common bands) based on UE hardware capabilities including sub-network devices priorities. At 314, if the target candidate bands are determined successfully, the process continues to 318. If the target candidate bands are determined unsuccessfully, the process continues to 316.

For example, at 312, the terminal device 102 may identify candidate bands that are also NW bands (but not used in the ongoing Uu connection with the terminal device 102. Based on the priority of the sub-network 110, the terminal device 102 may identify candidate bands that can be used for serving the sub-network 110. If the terminal device 102 can identify a candidate band that is also a common band, it means that only a single frequency band is needed for the sub-network to operate (as shown by DC_n1_n5-n12 and DC_n1_n5-n40 in FIG. 4). If the sub-network 110 is of high priority, the network device 104 may have to identify resources immediately and will prioritize to make a candidate band that is also a common band available. If the sub-network 110 is of high priority, the network device 104 may have to identify resources immediately and will prioritize the configuration combinations to make a candidate band that is also a common band available, as shown in FIG. 5.

FIG. 5 illustrates an example 500 of the network dropping a Uu band for granting sub-network candidacy due to the priority in accordance with some example embodiments of the present disclosure. In FIG. 5, DC_n1-n5_6Gnn is dropped on the Uu interface for granting sub-network candidacy because DC_n1_n5 is in sub-network configurations and is of high priority.

Now referring back to FIG. 3, if the sub-network is not of high priority (higher than a certain threshold), the network device 104 may have the possibility to select one or other candidate band with a selection criterion (e.g., a RSRP threshold). If the network device 104 finds the resources to grant the sub-network within the common-bands, the process continues to 318. If there's no resources to form the sub-network based on the conditions in step 5, the network continues to 316.

At 316, the network device 104 may determine the target candidate bands from available NW bands based on allocation in active bands of Uu interface, for example, the UE 102 may search for sub-network allocation options in candidate and common bands that are already being used by the network. Block 316 may be triggered by the network device 104, either if it is lacking block 312 or if the network device 104 wants to seek this opportunity as well.

The UE 102 may then, for each candidate band that is also a common band and used by the network device 104, determine whether it can support intra-band BWP splits (option 1). For example, one for Uu and one for a sub-network. The UE 102 may further determine whether it can multiplex sub-networks and Uu in time domain in a TDD band (option 2). The UE 102 may further determine whether it can multiplex sub-networks and Uu in time domain in a FDD band (option 3). The UE 102 may further determine whether it can place sub-networks in uplink symbols that might be subject to causing self-interference (option 4). The UE 102 may further determine it can perform any combinations of the above options (1) to (4).

In some example embodiments, for option (1), the UE may check additional configuration information of the lists of supported combinations. Intra-band BWP splits can be identified as band combinations with letters different than "A" of the UE capability list of CA and DC (such as DC_n1A-n5A_6GnnA), which will be explained in FIG. 6, which illustrates example bandwidth class information 600 of frequency band configurations in accordance with some example embodiments of the present disclosure.

As shown in FIG. 6, normally, bandwidth class information is used for determining intra-band configuration support, but herein it is used for determining the UE's capability to split the band into two adjacent channels (B or higher letter) of operation simultaneously. The letter is used by the UE 102 to determine the bandwidth which is available for reception of the combined Uu and sub-network signals. If the UE 102 has separate receivers inside the band (2A or higher numerical declaration, such as DC_n1A-n5(2A)_6GnnA), it may move the location of the sub-network placement beyond an adjacent frequency allocation.

In some example embodiments, for option (2), the UE 102 may have an additional information to indicate if time-division is supported, and what amount of simultaneous time-division operations it can support. As the band combination increases in a number of simultaneous active bands, the UE 102 may exhaust its baseband processes, which means that some of the highest combinations do not allow TDM of the additional sub-network, as there's no baseband signal processing resources available at the UE 102.

In some example embodiments, for option (3), the UE 102 may have an additional information if time-division is supported in FDD bands, and what amount of simultaneous time-division operations it can support when FDD bands are time-divided as well.

In some example embodiments, for option (4), the UE 102 may determine if an existing Uu CA combination suffers from one of the single UL MSD types as shown in Table 2.

**Table 2: Option 4 mapped into MSD conditions.**

| **MSD Type** | **Victim band is both Uu and sub-network (intra-band)** |
|---|---|
| UL harmonic | Improve candidacy compared to Uu operation. Uu may suffer less in receive quality degradation and sub-network operation is without impact |
| Harmonic mixing | |
| Cross-band interference | |

According to Table 2, if the Uu band combinations are subject to self-interference, the total power can be forced down. For example, by adding the UL of sub-network in the same band (intra-band), or splitting the output power and restricting the Uu interface to 3dB less while having a low output power of the sub-network, the total power can be brought down and the UE 102 suffers from less self-interference, at the expense of Uu coverage.

In summary, as an example of the procedures at the UE 102 to report additional information may be the procedures (1) to (7). Procedure (1): the UE 102 may receive a request from the NW for additional information on sub-network candidacy determine conditions for the common-bands. Procedure (2): the UE 102 may check the band combination list for the letter declaration at the end of the common-band. Procedure (3): if the letter declaration is different to "A", the UE 102 may nominate the common-band for candidacy with option (1) with intra and combined bandwidth (BW). If the letter declaration is "2A" (or higher number), the UE 102 may nominate option (1) with BW and frequency separation.

Procedure (4): the UE 102 may check the new UE internal data configuration for creation of sub-networks in TDD bands if the total number of simultaneous bands allows additional time-division of TDD bands. If so, the UE 102 may nominate common-band candidacy with option (2).

Procedure (5): the UE 102 may check new UE internal data configuration for FDD bands of every CA combination that may support sub-network if the total number of simultaneous bands allows additional time-division and if time-division can be applied in the FDD band. If so, the UE 102 may nominate common-band candidacy with option (3).

Procedure (6): the UE 102 may check if the Uu uplink has a single UL type MSD. If so, the sub-network can be nominated for intra-band configuration which can lower self-interference issues of the Uu layer. The UE 102 may nominate common-band candidacy with option (4). Procedure (7): the UE 102 may report the one or more options for each common-band, that makes them a candidate bands applying the configuration of the supported options.

At 318, the terminal device 102 may receive the sub-network grant and configuration determined by the network device 104 based on any combinations of the aforementioned additional information. At 320, the terminal device 102 may configure the sub-network device(s) 106 and/or 108 based on the received sub-network grant and configuration determined by the network device 104.

In some example embodiments, the network device 102 may have acquired a set of allocation options for the UEs sub-network in frequency bands that are at least candidate bands and will make a rating of the options available. This can be done by estimating the MSD that each option will require according to 3GPP RAN4 specifications, or it could be done based on a capacity tradeoff metric (what is needed by the sub-network and what is given away that could be used for the Uu interface), and so on. The network device 104 may eventually generate a sub-network resource grant. At 322, the process 300 ends.

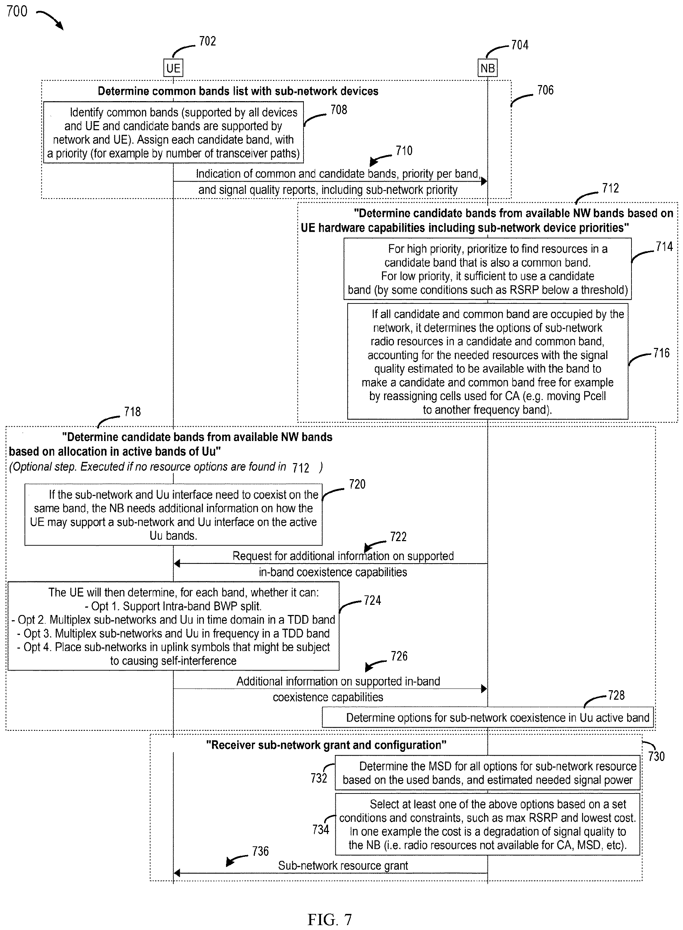

Reference is made to FIG. 7, which illustrates another example signaling process 700 of determining sub-network frequency bands in accordance with some example embodiments of the present disclosure. The UE 702 may correspond to the terminal device 102 in FIG. 1A, and the network node (NB) 704 may correspond to the network device 104 in FIG. 1A.

At 706, the UE 702 may determine a common band list with the sub-network devices 106 and 108. For example, as shown in 708, the UE 702 may identify common bands which are supported by all sub-network devices and the UE 702. The UE 702 may identify candidate bands which are supported by the NB 704 and the UE 702. The UE 702 may assign each candidate band with a priority (for example, by number of transceiver paths).

Then, at 710, the UE 102 may send indication of the common bands, the candidate bands and a priority per candidate band to the NB 704. The UE 102 may further send signal quality reports including sub-network device priorities to the NB 704.

At 712, the NB 704 may determine the candidate bands from available NW bands based on UE hardware capabilities including the sub-network device priorities. For example, at 714, a candidate band with a high priority, the NB 704 may prioritize the configuration combinations to find resources in a candidate band which is also in a common band. For a candidate band with a low priority, the UE 702 may use a candidate band under some conditions (such as RSRP below a threshold).

At 716, if all candidate band and common band are occupied by the NB 704, the NB 704 may determine the options of the sub-network radio resources in a candidate and common band accounting for the needed resources with the signal quality estimated to be available with the band to make a candidate and common band free. For example, the NB 704 may reassign cells used for CA (e.g., moving Pcell to another frequency band.)

At 718, the UE 702 may determine candidate bands from available NW bands based on allocation in active bands of the Uu interface if no resources are found in 712. For example, at 720, if the sub-network and the Uu interface need to coexist on the same band, the NB 704 may need some additional information on how UE may support a subnetwork and the Uu interface on the active Uu bands. As such, at 722, the UE 702 may receive a request for the additional information on supported in-band coexistence capabilities from the NB 704.

At 724, the UE 702 may determine, for each band, whether it is applicable for one or more of options (1) to options (4) aforementioned with reference to FIG. 3. At 726, the UE 702 may send the additional information on supported in-band coexistence capabilities to the NB 704. At 728, the NB 704 may determine options for the sub-network coexistence in the Uu active band.

At 730, the UE 702 may receive a sub-network grant and configuration from the NB 704. For example, at 732, the NB 704 may determine the MSD for all options (1) to (4) for the sub-network resource based on the used bands and the estimated needed signal power. At 734, the NB 704 may select at least one of the above options (1) to (4) based on a set of conditions and/or constraints. For example, a maximum reference signal received power (RSRP) and the lowest cost. In some example embodiments, the cost may be a degradation of signal quality to the NB 704 (i.e., radio resources not available for CA, MSD and so on). At 736, the NB 704 may send the sub-network grant and configuration to the UE 702.

By implementing embodiments of signaling processes 200 and 700, and the process 300, the terminal device can assist the network for creating the grant and assignment of the sub-network. In some example embodiments, the terminal device can combine its own hardware capabilities with those of the sub-network devices as the additional UE capability information and can determine ways to serve the sub-network within the resources available to the network. The additional UE capability information may include information of the UE configurability and activity of radio paths. Correspondingly, the network device can grant the sub-network based on the additional UE capability information.

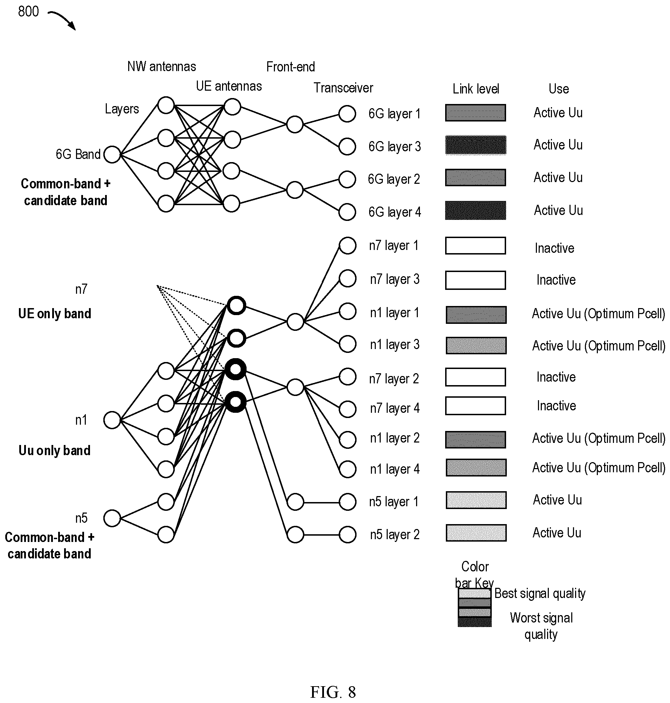

Reference is made to FIG. 8, which illustrates an example 800 of one of many UE hardware configurations reflected on candidacy of sub-network allocation in accordance with some example embodiments of the present disclosure. As aforementioned in FIG. 1L, the active Uu occupies two of the candidate bands considering the UE 102 with the sub-network device #z. Both the 6G band and the n5 band are candidates that the UE 102 can convey to the network, and based on priority of the service of the sub-network, the NW can grant in either of the candidate bands.

When the UE additionally informs the NW about the priority, the NW may deem the n5 band as the sub-network if there's high priority considering channel bandwidth demands and channel quality/conditions. The network may choose the 6G band, in case that the priority is less than the required good signal conditions, and from the reference signal received quality (RSRQ)/ channel quality indicator (CQI) levels, the UE may associate to the 6G band, the network may know that the UE can re-allocate up to two transceiver paths in the 6G band, as these have low quality reception at the Uu level.

Both UE 102 and the network device 104 may know that if the UE 102 uses the two antennas poorly receiving the 6G band from the network, the UE 102's (acting as the AP) local network at these antennas will also create less interference to the network, so the network can choose candidacy of the 6G band and restricting the UE 102 to use the antennas of least Uu quality. Since this condition can change due to movement, etc., the UE 102 may maintain scheduled measurements of the Uu link on all 6G band antennas periodically to move the sub-network to the two antennas that always are of least importance to the Uu connection.

As shown in FIG. 8, the UE has available hardware capability for band n7, however the band n7 is not supported by the network, nor the sub-network devices, so no Uu interface is accessible and as such the UE hardware capability is of no support to create the sub-network. The band n1 is available only for the Uu interface and the network may therefore choose this band n1 as the primary cell, to hand over a spectrum/time resource (the band n5 case above reducing Uu CA combination from 3 to 2) and using band n5 for sub-network assignment. The example explaining the process of determining candidate bands for the sub-network allocation in FIG. 8 was based on a fully depleted UE hardware capability.

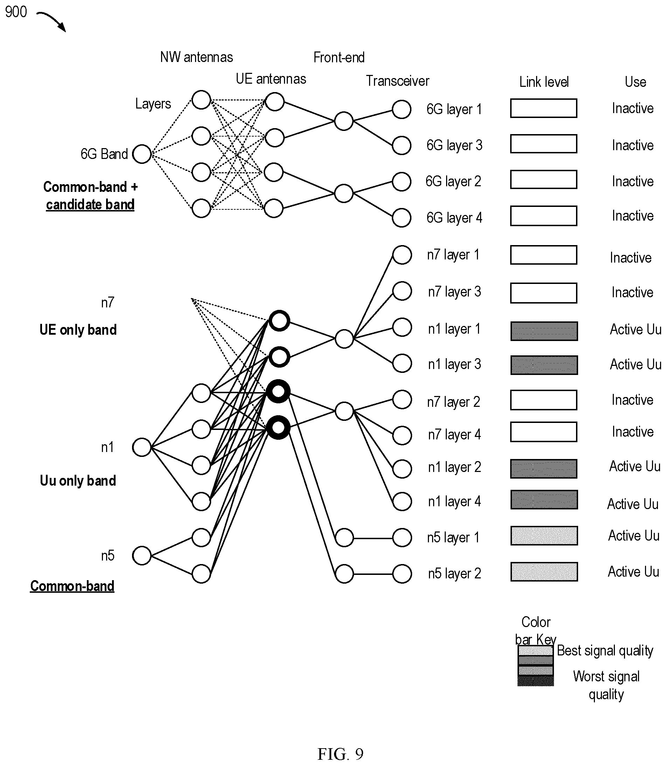

Reference is made to FIG. 9, which illustrates an example 900 showing options for determining sub-network candidacy with overhead hardware capability in accordance with some example embodiments of the present disclosure. The example 900 shows detailed information of the block 312 of FIG. 3. The 6G band becomes the candidate band, since it is not in use, as the network has chosen not to grant the UE a Uu connection to this band, but it is presented and supported also by the UE and the sub-network devices. The other common-band of band n5 will remain a Uu resource. Upon receiving the UE information messages of the sub-network, the NW can determine the 6G band candidacy easily since it is free.

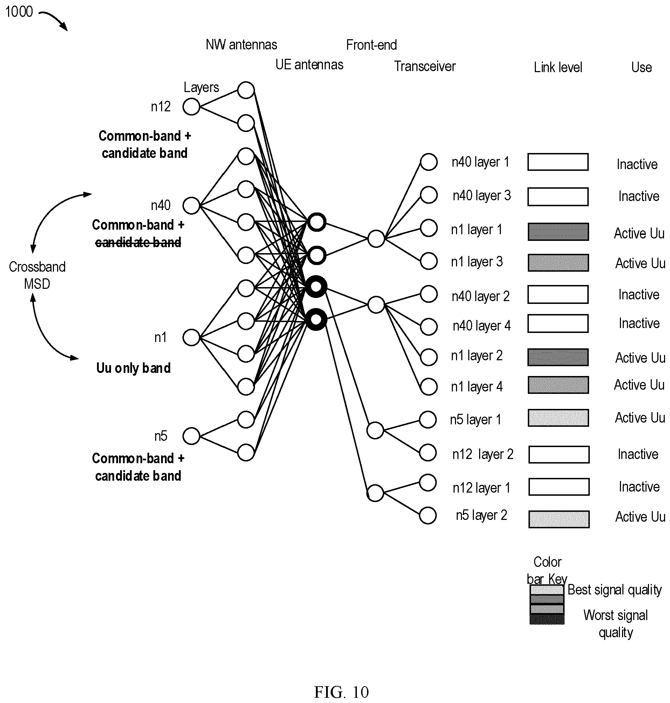

Reference is made to FIG. 10, which illustrates an example 1000 showing options for determining sub-network candidacy considering UE self-interference in accordance with some example embodiments of the present disclosure. The example 1000 shows how the UE hardware capability information serving the network, which is also an example of self-interference being considered for sub-network device #1 of FIG. 1L. The UE can utilize information or procedures to determine self-interference. The UE may know for the configuration possibilities in FIG. 10 that if the UE is nominating band n40 as a candidate band, the UE 102 may suffer from cross-band self-interference between band n1 and band n40 (Procedure 3). The network may choose to grant the sub-network at band n40, the Uu link on n1. This could even be the Pcell and would be severely impacted in receiver quality. The worst-case impact is for 100MHz channel allocation in band n40 uplink, which may create the adjacent channel leakage ratio (ACLR)-2 level inside the n1 receiver band. By 3GPP specification, the impact may create a need of 22dB sensitivity relaxation rendering band n1 in poor usage conditions. Since band n5 and band n12 are also bands for candidacy, the UE 102 may report these bands along with the priority of the band n12, since this is unused (refer to the right column). The self-interference associated to CA_n1-n5-n12 is of 5^{th} order at a much less interference level to n5 receive band and supported by the UE hardware simultaneously to activity on the other bands.

However, even if the UE reports the options to the network, it can be different factors known only to the network that determines the sub-network grant and location. As shown in FIG. 10, the network may assign the band n40 anyway for different reasons. It could be that the network has determined that the sub-network only is allowed a lesser power class, which will result in a much lesser crossband interference and therefore make n40 a target candidate band, since the network may not use it in combination with band n1 at a large UE distances to the base station antenna (cell edge). It could also be that the network wants to keep band n12 open as an additional resource for the Uu interface to increase the CA (CA_n1-n5) to a 3CA combination (CA_n1-n5-n12), which is in terms of self-interference issues rather preferred than CA_n1-n5-n40.

In summary, FIG. 8 to FIG. 10 show the example related to the hardware support for additional transceiver paths. FIG. 8 also shows the example related to activity in licensed bands including signal strength information at the UE, which is a 6G band case. FIG. 8 also shows the example related to sub-network device priority (such as the subscription based sub-network), which is a n5 band case. FIG. 9 also shows the example related to re-allocation of transceiver paths at antennas not serving Uu for sub-network candidacy, which is a 6G band case. FIG. 10 also shows the example related to self-interference values or measurements associated to candidate bands of the common-bands list, which is a n12 band case. The UE may use any information and ways described with FIG. 8 to FIG. 10 to determine bands for candidacy.

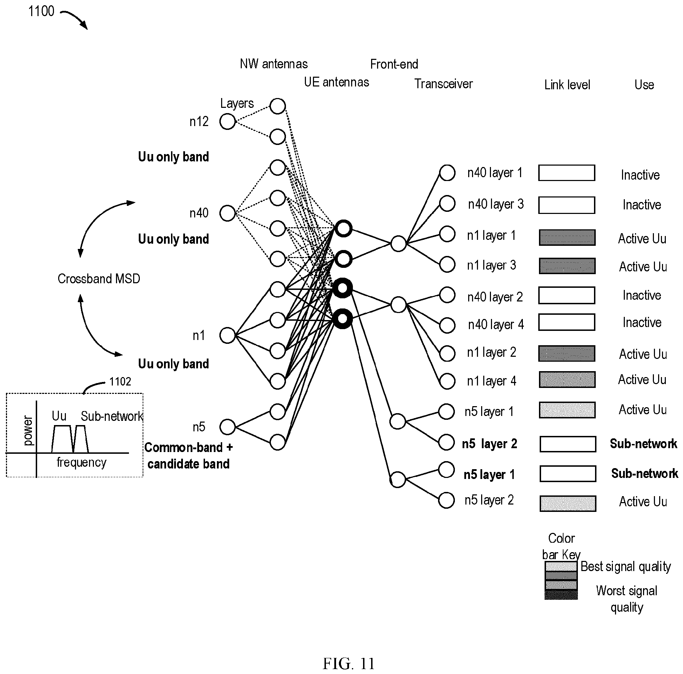

Reference is made to FIG. 11, which illustrates an example 1100 of configuration that requires sharing of channel bandwidth of a Uu interface in accordance with some example embodiments of the present disclosure. The UE with limited hardware capabilities for options that do not sacrifice throughput may find a different configuration that serves the sub-network, besides the block 312 in FIG. 3. If considering again the sub-network device #z of FIG. 1L, and using the same network as in FIG. 10 with an active Uu on the common-band n5 as shown in FIG. 11, the UE 102 may have to inform the network of the hardware capability to support intra-band in band n5 (and band n12 for that matter, even it is not a common-band, but as part of standard messaging). This intra-band capability can be used for splitting the channel bandwidth or allocating another BWP next to the Uu channel as indicated by the spectrum plot in block 1102 of FIG. 11.

In some example embodiments, the UE 102 may sacrifice the support of the band n12 while promote candidacy at band n5 with intra-band configuration. The network may still engage band n40 in CA combination at the Uu interface, while it can allocate the sub-network as supported by the UE intra-band capability. The network channel bandwidth of band n5 becomes the bottle neck and it can be the case that the Uu suffers in throughput to service the sub-network. A sacrifice that may be neglected if the network switches on the band n40 in a CA configuration at Uu or it moves to CA_n1-n12-n40 with uplink in band n12 or bands n1 and n12 depending on UE self-interference tolerance, and leaves band n5 for the sub-network.

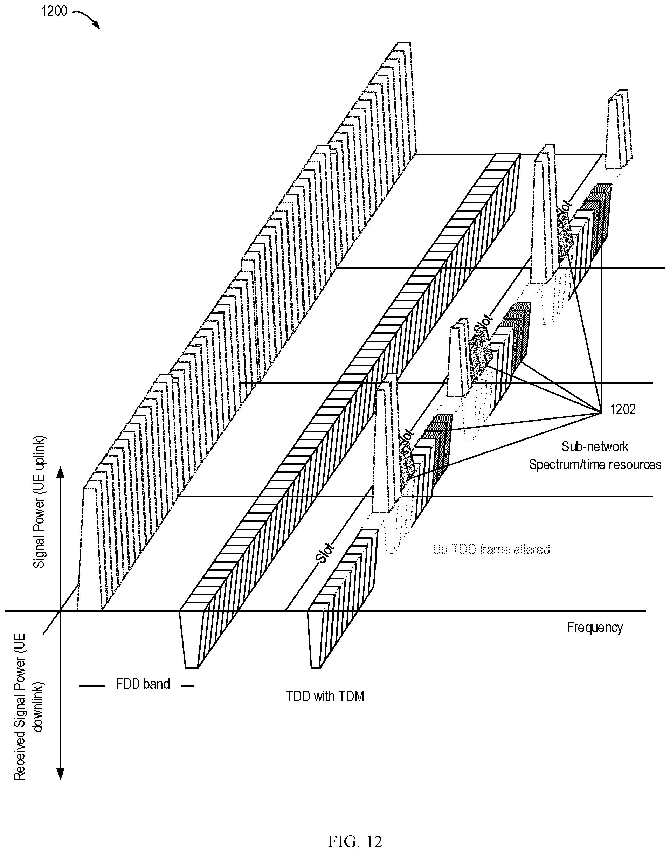

Reference is made to FIG. 12, which illustrates an example 1200 of a band combination of FDD and TDD frequency bands in accordance with some example embodiments of the present disclosure. The UE 102 may also present an alternative to the frequency split/intra-band capability, which is a time division alternative that lowers Uu throughput. The UE 102 may include capabilities in exchange messaging that indicates that the UE 102 supports multiplexing the sub-network into the TDD frame-structure in the candidate TDD band, and the candidate TDD band allows usage of e.g., band n40 (TDD band) for the sub-network device #1 of FIG. 1L and the 6G band for the sub-network device #z in both Uu and sub-network interfacing. This TDM scheme is shown in FIG. 12. The network blanks downlink symbols at the start and end of the downlink sequence allowing the sub-network to utilize these (as represented by resources 1202). In case there's asynchronous alignment, additional blanking on both interfaces will be required.

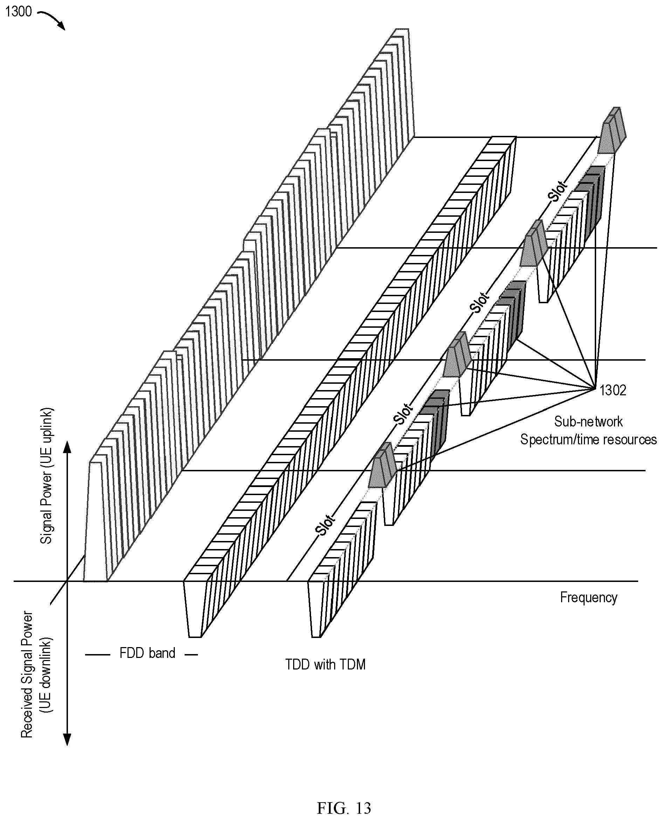

Reference is made to FIG. 13, which illustrates an example use 1300 of Uu TDD uplink for sub-network in accordance with some example embodiments of the present disclosure. As what is described for 312 of FIG. 3, the UE 102 can be causing self-interference through cross-band interference from the uplink (as shown in FIG. 10), which was found in the combination of band n1 and band n40, the network may anyway have used the TDD band for DL only, at which point the sub-network could be granted the uplink symbols at no extra cost to the network Uu link. This is though provided that the sub-network is limited in power class, so the uplink is kept below the output power level and channel bandwidth that creates cross-band interference into the Uu band. The network could provide this maximum output power level of the sub-network to the UE. Such scheme is shown in FIG. 13, where the Uu uplink is replaced by the sub-network uplink, reducing the Uu frame structure by three downlink symbols per slot (as shown by resources 1302).

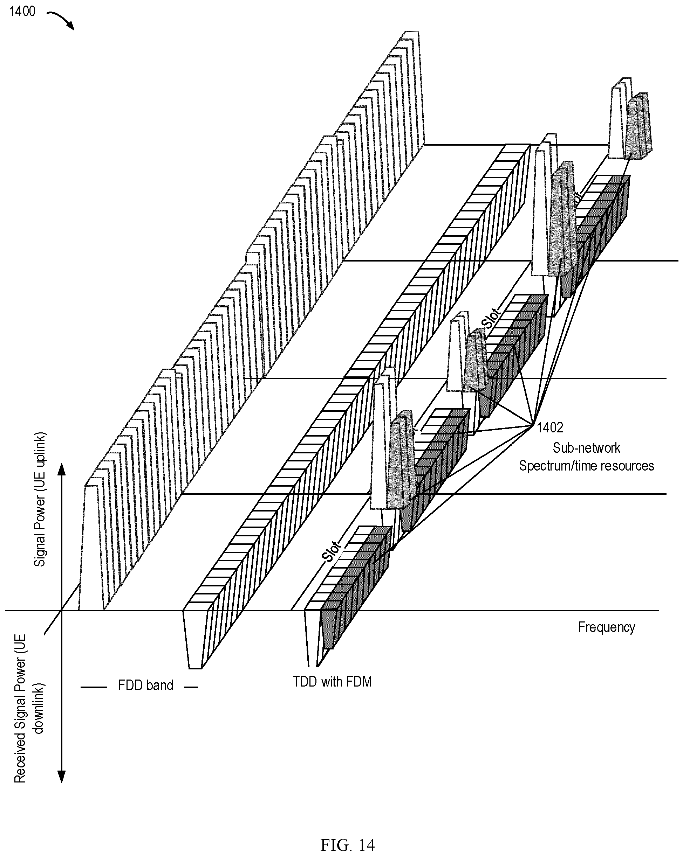

Reference is made to FIG. 14, which illustrates an example frequency band combination 1400 of FDD and TDD frequency bands in accordance with some example embodiments of the present disclosure. The UE can have additional frequency resources that the network can share. By using FDM the multiplexing, the resources 1402 can be used.

In summary, FIG. 12 shows an example related to Intra-band hardware capabilities and splitting of channel bandwidth. FIG. 13 shows an example related to capability to support TDM on candidate band(s) and Sub-network uplink in self-interference-generating Uu uplink channels. FIG. 14 shows an example related to capability to support FDM on candidate band(s). A UE may use the additional following information as discussed with reference to FIG. 12 to FIG. 14 to determine bands for candidacy.

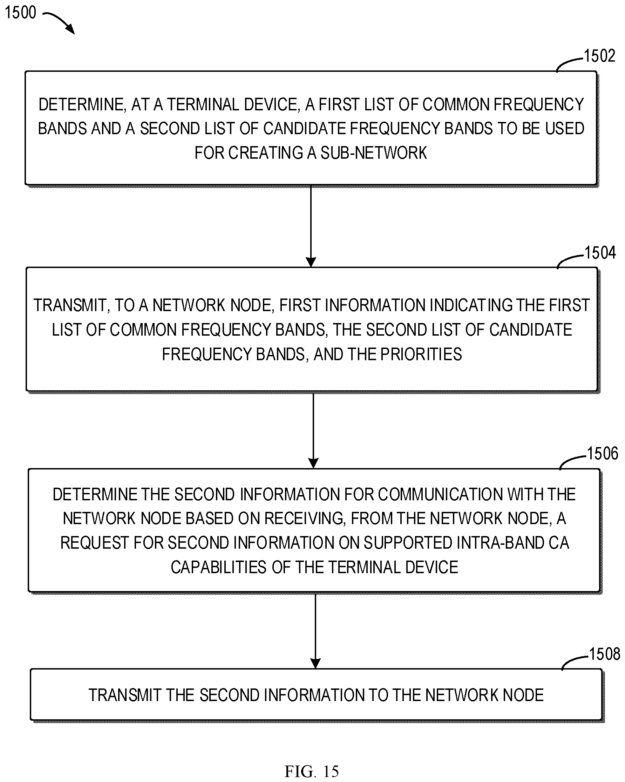

Reference is made to FIG. 15, which illustrates an example flowchart of a method 1500 for determining sub-network frequency bands in accordance with some example embodiments of the present disclosure. FIG. 15 will be described with reference to FIG. 1A.

At 1502, the terminal device 102 determines a first list of common frequency bands and a second list of candidate frequency bands to be used for creating a sub-network 110. The common frequency bands may be supported by the sub-network 110 and the terminal device 102, and the candidate frequency bands may be supported by the network node 104 and the terminal device 102, and the common frequency bands and the candidate frequency bands may be associated with priorities.

At 1504, the terminal device 102 transmits, to the network node 104, first information indicating the first list of common frequency bands, the second list of candidate frequency bands, and the priorities.

At 1506, if the terminal device 102 receives, from the network node 104, a request for second information on supported intra-band CA capabilities of the terminal device 102, the terminal device 102 determines the second information for communication with the network node 104. At 1508, the terminal device 102 transmits the second information to the network node 104.

In some example embodiments, the terminal device 102 may determine, based on at least one of an MSD, sub-network configurations, terminal device configurations and network node configurations and from the second list, a plurality of combinations of fewer frequency bands than a configured combination of frequency bands supporting the sub-network 110.

In some example embodiments, the terminal device 102 may determine the plurality of combinations of fewer frequency bands by the following steps: the terminal device 102 may determine that whether at least one higher order configuration comprising any frequency band of the first list exits. The terminal device 102 may further identify, for a configuration of the at least one higher order configurations which allows a combination of a Uu frequency band and a sub-network frequency band, a self-interference issue of any of the plurality of combinations of fewer frequency bands based on a list of relations of CA and MSD. The terminal device 102 may further prioritize frequency bands in the at least one higher order configurations based on a predetermined rule based on the self-interference issue being identified.

In some example embodiments, the terminal device 102 may determine the plurality of combinations of fewer frequency bands by the following steps: the terminal device 102 may determine frequency bands used for a UL associated with the network node 104 and with the sub-network 110. The terminal device 102 may further prioritize configurations of frequency bands combinations which cause self-interference issue from the frequency bands used for the UL associated with the network node 104 over those that are associated with the sub-network 110.

In some example embodiments, the predetermined rule may comprise at least one of the following: for a MSD type of UL harmonic, harmonic mixing and cross-band interference: in the event that the Uu frequency band is a victim frequency band, determining the Uu frequency band as a higher priority candidate frequency band than other frequency bands; and in the event that the sub-network frequency band is a victim frequency band, determining the sub-network frequency band as a lower priority candidate frequency band than other frequency bands.

In some example embodiments, the predetermined rule may comprise at least one of the following: for a MSD type of intermodulation, preventing from selecting all combinations of 2 UL frequency bands used for the UL associated with the network node 104; or consider a UL combination associated with the network node 104 and with the sub-network 110 to mitigate any self-interference issue of MSD type of IMD.

In some example embodiments, the terminal device 102 may determine the allocation of active frequency bands for communication with the network node by the following steps: for a candidate frequency band of the second list which is also in the first list and is active towards the network node 104, the terminal device 102 may check bandwidth class information of a plurality of frequency band configurations; and determine intra-band CA support based on the bandwidth class information.

In some example embodiments, the intra-band carrier aggregation support may comprise at least one of the following: splitting a frequency band into two bandwidth parts of adjacent channel allocation; or moving a location of a sub-network bandwidth part beyond an adjacent frequency allocation.

In some example embodiments, the terminal device 102 may determine the allocation of active frequency bands for communication with the network node 104 by the following steps: the terminal device 102 may multiplex sub-networks frequency bands and Uu frequency bands in time domain in an active TDD frequency band if a number of frequency bands allows additional time-division of TDD frequency bands.

In some example embodiments, the terminal device 102 may determine the allocation of active frequency bands for communication with the network node 104 by the followings steps: the terminal device 102 may multiplex sub-networks frequency bands and Uu frequency bands in time domain in the active FDD frequency band if a number of frequency bands allows additional time-division and the additional time-division is applicable in an FDD frequency band.

In some example embodiments, the terminal device 102 may determine the allocation of active frequency bands for communication with the network node 104 by the followings steps: the terminal device 102 may determine whether the UL associated with the network node 104 suffers from one of a self-interference comprising UL harmonic, harmonic mixing and cross-band interference; and add an UL frequency band of the sub-network 110 to an intra-band configuration based on determining that the UL associated with the network node 104 suffers from one of the self-interferences. The UL frequency band of the sub-network may lower the one of the self-interference issues.

In some example embodiments, the intra-band CA capabilities may comprise in-band co-coexistence capabilities.

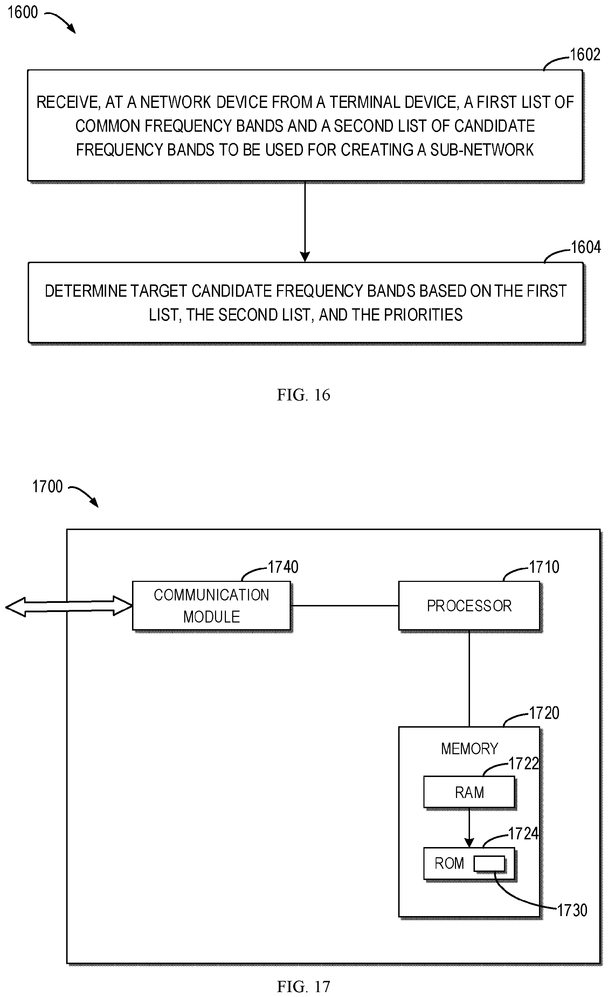

Reference is made to FIG. 16, which illustrates an example flowchart of a method 1600 for determining sub-network frequency bands in accordance with some example embodiments of the present disclosure. FIG. 16 will be described with reference to FIG. 1A.

At 1602, the network device 104 receives, from the terminal device 102, a first list of common frequency bands and a second list of candidate frequency bands to be used for creating the sub-network 110. The common frequency bands may be supported by the sub-network 110 and the terminal device 102, and the candidate frequency bands may be supported by the network device 104 and the terminal device 102, and the common frequency bands and the candidate frequency bands may be associated with priorities. At 1604, the network device 104 determines target candidate frequency bands based on the first list, the second list, and the priorities.

In some example embodiments, the network device 104 may transmit, to the terminal device 102, a request for information on supported intra-band CA capabilities if no resource is determined to be used for creating the sub-network 110 within the first list.

In some example embodiments, the network device 104 may receive, from the terminal device 102, the information on supported intra-band CA capabilities.

It is to be understood that the method 1500 and/or method 1600 may comprise further steps corresponding to the example embodiments as provided by FIGS. 2-14, and thus for the purpose of simplification, herein, the further steps will not be described again.

By implementing the example embodiments as provided by the method 1500 or the method 1600, the terminal device can assist the network for creating the grant and assignment of the sub-network. In some example embodiments, the terminal device can combine its own hardware capabilities with those of the sub-network devices as the additional UE capability information and can determine ways to serve the sub-network within the resources available to the network. The additional UE capability information may include information of the UE configurability and activity of radio paths. Correspondingly, the network device can grant the sub-network based on the additional UE capability information.

In some example embodiments, an apparatus capable of performing the method 1500 (for example, the terminal device 102) may comprise means for performing the respective steps of the method 1500. The means may be implemented in any suitable form. For example, the means may be implemented in a circuitry or software module.

In some example embodiments, the apparatus comprises means for determining a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; means for transmitting, to the network node, first information indicating the first list of common frequency bands, the second list of candidate frequency bands, and the priorities; means for determining the second information based on allocation of active frequency bands for communication with the network node based on receiving, from the network node, a request for second information on supported intra-band CA capabilities of the terminal device; and means for transmitting the second information to the network node.

In some example embodiments, the apparatus may further comprise means for determining, based on at least one of an MSD, sub-network configurations, terminal device configurations and network node configurations and from the second list, a plurality of combinations of fewer frequency bands than a configured combination of frequency bands supporting the sub-network.

In some example embodiments, the means for determining the plurality of combinations of fewer frequency bands may comprise means for determining that whether at least one higher order configuration comprising any frequency band of the first list exits; means for identifying, for a configuration of the at least one higher order configurations which allows a combination of a Uu frequency band and a sub-network frequency band, a self-interference issue of any of the plurality of combinations of fewer frequency bands based on a list of relations of CA and MSD; and means for prioritizing frequency bands in the at least one higher order configurations based on a predetermined rule based on the self-interference issue being identified.

In some example embodiments, the means for determining the plurality of combinations of fewer frequency bands may further comprise means for determining frequency bands used for a UL associated with the network node and with the sub-network; and means for prioritizing configurations of frequency bands combinations which cause self-interference issue from the frequency bands used for the UL associated with the network node over those that are associated with the sub-network.

In some example embodiments, the means for determining the allocation of active frequency bands for communication with the network node may comprise means for checking bandwidth class information of a plurality of frequency band configurations for a candidate frequency band of the second list which is also in the first list and is active towards the network node; and means for determining intra-band CA support based on the bandwidth class information.

In some example embodiments, the means for determining the allocation of active frequency bands for communication with the network node may comprise means for multiplexing sub-networks frequency bands and Uu frequency bands in time domain in an active TDD frequency band if a number of frequency bands allows additional time-division of TDD frequency bands.

In some example embodiments, the means for determining the allocation of active frequency bands for communication with the network node may comprise means for multiplexing sub-networks frequency bands and Uu frequency bands in time domain in the active FDD frequency band if a number of frequency bands allows additional time-division and the additional time-division is applicable in an FDD frequency band.

In some example embodiments, the means for determining the allocation of active frequency bands for communication with the network node may comprise means for determining whether the UL associated with the network node suffers from one of a self-interference comprising UL harmonic, harmonic mixing and cross-band interference; and means for adding a UL frequency band of the sub-network to an intra-band configuration based on determining that the UL associated with the network node suffers from one of the self-interferences, wherein the UL frequency band of the sub-network may lower the one of the self-interference issues.

In some example embodiments, the apparatus may further comprise means for performing other steps in some embodiments of the method 1500. In some example embodiments, the means comprises at least one processor and at least one memory including computer program code, the at least one memory and computer program code configured to, with the at least one processor, cause the performance of the apparatus.

In some example embodiments, an apparatus capable of performing the method 1600 (for example, the network device 104) may comprise means for performing the respective steps of the method 1600. The means may be implemented in any suitable form. For example, the means may be implemented in a circuitry or software module.

In some example embodiments, the apparatus comprises means for receiving, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and means for determining target candidate frequency bands based on the first list, the second list, and the priorities.

In some example embodiments, the apparatus may further comprise means for transmitting, to the terminal device, a request for information on supported intra-band CA capabilities if no resource is determined to be used for creating the sub-network within the first list.

In some example embodiments, the apparatus may further comprise means for receiving, from the terminal device, the information on supported intra-band CA capabilities.

In some example embodiments, the apparatus may further comprise means for performing other steps in some embodiments of the method 1600. In some example embodiments, the means comprises at least one processor and at least one memory including computer program code, the at least one memory and computer program code configured to, with the at least one processor, cause the performance of the apparatus.

Reference is made to FIG. 17, which illustrates an example simplified block diagram of a device 1700 that is suitable for implementing embodiments of the present disclosure. The device 1700 may be provided to implement the communication device, for example the terminal device 102 or the network device 104 as shown in FIG. 1A. As shown, the device 1700 includes one or more processors 1710, one or more memories 1720 may couple to the processor 1710, and one or more communication modules 1740 may couple to the processor 1710.

The communication module 1740 is for bidirectional communications. The communication module 1740 has at least one antenna to facilitate communication. The communication interface may represent any interface that is necessary for communication with other network elements, for example the communication interface may be wireless or wireline to other network elements, or software based interface for communication.

The processor 1710 may be of any type suitable to the local technical network and may include one or more of the following: general purpose computers, special purpose computers, microprocessors, digital signal processors (DSPs) and processors based on multicore processor architecture, as non-limiting examples. The device 1700 may have multiple processors, such as an application specific integrated circuit chip that is slaved in time to a clock which synchronizes the main processor.

The memory 1720 may include one or more non-volatile memories and one or more volatile memories. Examples of the non-volatile memories include, but are not limited to, a read only memory (ROM) 1724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1722 and other volatile memories that will not last in the power-down duration.

A computer program 1730 includes computer executable instructions that are executed by the associated processor 1710. The program 1730 may be stored in the ROM 1724. The processor 1710 may perform any suitable actions and processing by loading the program 1730 into the RAM 1722.

The embodiments of the present disclosure may be implemented by means of the program so that the device 1700 may perform any process of the disclosure as discussed with reference to FIGS. 15 and 16. The embodiments of the present disclosure may also be implemented by hardware or by a combination of software and hardware.

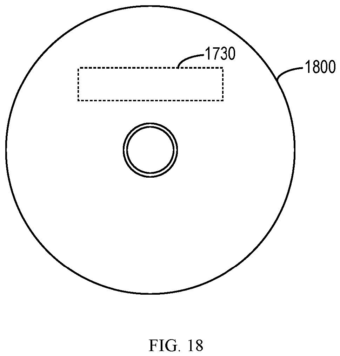

In some embodiments, the program 1730 may be tangibly contained in a computer readable medium which may be included in the device 1700 (such as in the memory 1720) or other storage devices that are accessible by the device 1700. The device 1700 may load the program 1730 from the computer readable medium to the RAM 1722 for execution. The computer readable medium may include any types of tangible non-volatile storage, such as ROM, EPROM, a flash memory, a hard disk, CD, DVD, and the like. FIG. 18 shows an example of the computer readable medium 1800 in form of CD or DVD. The computer readable medium has the program 1730 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 1500 or 1600 as described above with reference to FIG. 15 or 16. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

The present subject matter may comprise the following clauses.

Clause 1. A terminal device comprising: at least one processor; and at least one memory storing instructions that, when executed by the at least one processor, cause the terminal device at least to: determine a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; transmit, to the network node, first information indicating the first list of common frequency bands, the second list of candidate frequency bands, and the priorities; based on receiving, from the network node, a request for second information on supported intra-band carrier aggregation (CA) capabilities of the terminal device, determine the second information for communication with the network node; and transmit the second information to the network node.

Clause 2. The terminal device of clause 1, wherein the terminal device is further caused to: determine, based on at least one of a minimum maximum sensitivity (MSD), sub-network configurations, terminal device configurations and network node configurations and from the second list, a plurality of combinations of fewer frequency bands than a configured combination of frequency bands supporting the sub-network.

Clause 3. The terminal device of clause 2, wherein the terminal device is further caused to determining the plurality of combinations of fewer frequency bands by: determining that whether at least one higher order configuration comprising any frequency band of the first list exits; based on determining the existence, identifying, for a configuration of the at least one higher order configurations which allows a combination of a Uu frequency band and a sub-network frequency band, a self-interference issue of any of the plurality of combinations of fewer frequency bands based on a list of relations of CA and MSD; and based on the self-interference issue being identified, prioritizing frequency bands in the at least one higher order configurations based on a predetermined rule.

Clause 4. The terminal device of clause 3, wherein the terminal device is further caused to determine the plurality of combinations of fewer frequency bands by: determining frequency bands used for an uplink (UL) associated with the network node and with the sub-network; and prioritizing configurations of frequency bands combinations which cause self-interference issue from the frequency bands used for the UL associated with the network node over those that are associated with the sub-network.

Clause 5. The terminal device of clause 4, wherein the predetermined rule comprises at least one of the following: for a MSD type of UL harmonic, harmonic mixing and cross-band interference: in the event that the Uu frequency band is a victim frequency band, determining the Uu frequency band as a higher priority candidate frequency band than other frequency bands; and in the event that the sub-network frequency band is a victim frequency band, determining the sub-network frequency band as a lower priority candidate frequency band than other frequency bands.

Clause 6. The terminal device of clause 4 or 5, wherein the predetermined rule comprises at least one of the following: for a MSD type of intermodulation, preventing from selecting all combinations of 2 UL frequency bands used for the UL associated with the network node; and consider a UL combination associated with the network node and with the sub-network to mitigate any self-interference issue of MSD type of intermodulation products (IMD).

Clause 7. The terminal device of any of clauses 1-6, wherein the terminal device is further caused to determine the allocation of active frequency bands for communication with the network node by: for a candidate frequency band of the second list which is also in the first list and is active towards the network node: checking bandwidth class information of a plurality of frequency band configurations; and determining intra-band CA support based on the bandwidth class information.

Clause 8. The terminal device of clause 7, wherein the intra-band carrier aggregation support comprises at least one of the following: splitting a frequency band into two bandwidth parts of adjacent channel allocation; or moving a location of a sub-network bandwidth part beyond an adjacent frequency allocation.

Clause 9. The terminal device of any of clauses 1-8, wherein the terminal device is further caused to determine the allocation of active frequency bands for communication with the network node by: in the event that a number of frequency bands allows additional time-division of time division duplex (TDD) frequency bands, multiplexing sub-networks frequency bands and Uu frequency bands in time domain in an active TDD frequency band.

Clause 10. The terminal device of any of clauses 1-9, wherein the terminal device is further caused to determine the allocation of active frequency bands for communication with the network node by: in the event that a number of frequency bands allows additional time-division and the additional time-division is applicable in a frequency division duplex (FDD) frequency band, multiplexing sub-networks frequency bands and Uu frequency bands in time domain in the active FDD frequency band.

Clause 11. The terminal device of any of clauses 1-10, wherein the terminal device is further caused to determine the allocation of active frequency bands for communication with the network node by: determining whether the UL associated with the network node suffers from one of a self-interference comprising UL harmonic, harmonic mixing and cross-band interference; and based on determining that the UL associated with the network node suffers from one of the self-interferences, adding an UL frequency band of the sub-network to an intra-band configuration, wherein the UL frequency band of the sub-network lowers the one of the self-interference issues.

Clause 12. The terminal device of any of clauses 1-11, wherein the intra-band CA capabilities comprise in-band co-coexistence capabilities.

Clause 13. A network device comprising: at least one processor; and at least one memory storing instructions that, when executed by the at least one processor, cause the network device at least to: receive, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and determine target candidate frequency bands based on the first list, the second list, and the priorities.

Clause 14. The network device of clause 13, wherein the network device is further caused to: in the event that no resource is determined to be used for creating the sub-network within the first list, transmit, to the terminal device, a request for information on supported intra-band carrier aggregation (CA) capabilities.

Clause 15. The network device of clause 14, wherein the network device is further caused to: receive, from the terminal device, the information on supported intra-band CA capabilities.

Clause 16. The network device of any of clauses 13-15, wherein the intra-band CA capabilities comprise in-band co-coexistence capabilities.

Clause 17. A method comprising: determining, at a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; transmitting, to the network node, first information indicating the first list of common frequency bands, the second list of candidate frequency bands, and the priorities; based on receiving, from the network node, a request for second information on supported intra-band carrier aggregation (CA) capabilities of the terminal device, determining the second information based on allocation of active frequency bands for communication with the network node; and transmitting the second information to the network node.

Clause 18. The method of clause 17, wherein determining the allocation of active frequency bands for communication with the network node comprises: for a candidate frequency band of the second list which is also in the first list and is active towards the network node: checking bandwidth class information of a plurality of frequency band configurations; and determining intra-band CA support based on the bandwidth class information.

Clause 19. The method of clause 17, wherein the intra-band carrier aggregation support comprises at least one of the following: splitting a frequency band into two bandwidth parts of adjacent channel allocation; or moving a location of a sub-network bandwidth part beyond an adjacent frequency allocation.

Clause 20. The method of clause 17 or 18, wherein determining the allocation of active frequency bands for communication with the network node further comprises: in the event that a number of frequency bands allows additional time-division of time division duplex (TDD) frequency bands, multiplexing sub-networks frequency bands and Uu frequency bands in time domain in an active TDD frequency band.

Clause 21. The method of any of clauses 17-20, wherein determining the allocation of active frequency bands for communication with the network node further comprises: in the event that a number of frequency bands allows additional time-division and the additional time-division is applicable in a frequency division duplex (FDD) frequency band, multiplexing sub-networks frequency bands and Uu frequency bands in time domain in the active FDD frequency band.

Clause 22. The method of any of clauses 17-21, wherein determining the allocation of active frequency bands for communication with the network node comprises: determining whether the UL associated with the network node suffers from one of a self-interference comprising UL harmonic, harmonic mixing and cross-band interference; and based on determining that the UL associated with the network node suffers from one of the self-interferences, adding an UL frequency band of the sub-network to an intra-band configuration, wherein the UL frequency band of the sub-network lowers the one of the self-interference issues.

Clause 23. An apparatus comprising: means for determining a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; means for transmitting, to the network node, first information indicating the first list of common frequency bands, the second list of candidate frequency bands, and the priorities; means for based on receiving, from the network node, a request for second information on supported intra-band carrier aggregation (CA) capabilities of the terminal device, determining the second information based on allocation of active frequency bands for communication with the network node; and means for transmitting the second information to the network node.

Clause 24. An apparatus comprising: means for receiving, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and means for determining target candidate frequency bands based on the first list, the second list, and the priorities.

Clause 25. A non-transitory computer readable medium comprising program instructions for causing an apparatus to perform the method of any of clauses of 17-22.

## Claims

1. An apparatus comprising:
means for determining a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities;
means for transmitting, to the network node, first information indicating the first list of common frequency bands, the second list of candidate frequency bands, and the priorities;
means for based on receiving, from the network node, a request for second information on supported intra-band carrier aggregation (CA) capabilities of the terminal device, determining the second information for communication with the network node; and
means for transmitting the second information to the network node.

2. The apparatus of claim 1, wherein the apparatus comprises:
means for determining, based on at least one of a minimum maximum sensitivity (MSD), sub-network configurations, terminal device configurations and network node configurations and from the second list, a plurality of combinations of fewer frequency bands than a configured combination of frequency bands supporting the sub-network.

3. The apparatus of claim 2, wherein the apparatus comprises: means for determining the plurality of combinations of fewer frequency bands comprising:
means for determining that whether at least one higher order configuration comprising any frequency band of the first list exits;
means for, based on determining the existence, identifying, for a configuration of the at least one higher order configurations which allows a combination of a Uu frequency band and a sub-network frequency band, a self-interference issue of any of the plurality of combinations of fewer frequency bands based on a list of relations of CA and MSD; and
means for, based on the self-interference issue being identified, prioritizing frequency bands in the at least one higher order configurations based on a predetermined rule.

4. The apparatus of claim 3, wherein the apparatus comprises means for, determining the plurality of combinations of fewer frequency bands comprising:
means for determining frequency bands used for an uplink (UL) associated with the network node and with the sub-network; and
means for prioritizing configurations of frequency bands combinations which cause self-interference issue from the frequency bands used for the UL associated with the network node over those that are associated with the sub-network.

5. The apparatus of claim 4, wherein the predetermined rule comprises at least one of the following:
for a MSD type of UL harmonic, harmonic mixing and cross-band interference:
in the event that the Uu frequency band is a victim frequency band, determining the Uu frequency band as a higher priority candidate frequency band than other frequency bands; and
in the event that the sub-network frequency band is a victim frequency band, determining the sub-network frequency band as a lower priority candidate frequency band than other frequency bands.

6. The apparatus of claim 4 or 5, wherein the predetermined rule comprises at least one of the following:
for a MSD type of intermodulation, preventing from selecting all combinations of 2 UL frequency bands used for the UL associated with the network node; and
consider a UL combination associated with the network node and with the sub-network to mitigate any self-interference issue of MSD type of intermodulation products (IMD).

7. The apparatus of any of claims 1-6, wherein the apparatus comprises means for determining the allocation of active frequency bands for communication with the network node comprising:
for a candidate frequency band of the second list which is also in the first list and is active towards the network node:
means for checking bandwidth class information of a plurality of frequency band configurations; and
means for determining intra-band CA support based on the bandwidth class information.

8. The apparatus of claim 7, wherein the intra-band carrier aggregation support comprises at least one of the following:
splitting a frequency band into two bandwidth parts of adjacent channel allocation; or
moving a location of a sub-network bandwidth part beyond an adjacent frequency allocation.

9. The apparatus of any of claims 1-8, wherein the apparatus comprises means for determining the allocation of active frequency bands for communication with the network node by:
in the event that a number of frequency bands allows additional time-division of time division duplex (TDD) frequency bands, means for multiplexing sub-networks frequency bands and Uu frequency bands in time domain in an active TDD frequency band.

10. The apparatus of any of claims 1-9, wherein the apparatus comprises means for determining the allocation of active frequency bands for communication with the network node comprising:
in the event that a number of frequency bands allows additional time-division and the additional time-division is applicable in a frequency division duplex (FDD) frequency band, means for multiplexing sub-networks frequency bands and Uu frequency bands in time domain in the active FDD frequency band.

11. The apparatus of any of claims 1-10, wherein the apparatus comprises means for determining the allocation of active frequency bands for communication with the network node comprising:
means for determining whether the UL associated with the network node suffers from one of a self-interference comprising UL harmonic, harmonic mixing and cross-band interference; and
based on determining that the UL associated with the network node suffers from one of the self-interferences, means for adding an UL frequency band of the sub-network to an intra-band configuration, wherein the UL frequency band of the sub-network lowers the one of the self-interference issues.

12. The apparatus of any of claims 1-11**,** wherein the intra-band CA capabilities comprise in-band co-coexistence capabilities.

13. An apparatus comprising:
means for receiving, from a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities; and
means for determining target candidate frequency bands based on the first list, the second list, and the priorities.

14. A method comprising:
determining, at a terminal device, a first list of common frequency bands and a second list of candidate frequency bands to be used for creating a sub-network, wherein the common frequency bands are supported by the sub-network and the terminal device, the candidate frequency bands are supported by a network node and the terminal device, and the common frequency bands and the candidate frequency bands are associated with priorities;
transmitting, to the network node, first information indicating the first list of common frequency bands, the second list of candidate frequency bands, and the priorities;
based on receiving, from the network node, a request for second information on supported intra-band carrier aggregation (CA) capabilities of the terminal device, determining the second information based on allocation of active frequency bands for communication with the network node; and
transmitting the second information to the network node.

15. A non-transitory computer readable medium comprising program instructions for causing an apparatus to perform the method of claim 14.
